# EUROPEAN PATENT APPLICATION

(11) **EP 3 261 054 A1**
(43) Date of publication of application: **27.12.2017**
(21) Application number: 16748718.0
(22) Date of filing: 04.02.2016
(51) Int. Cl.: G06Q 50/30, G08G 1/00

(54) **ORDER PUSHING METHOD AND SYSTEM**

(30) Priority: 10.02.2015 CN 201510070493; 12.03.2015 CN 201510109403; 20.08.2015 CN 201510516211
(71) Applicant: Beijing Didi Infinity Technology and Development Co., Ltd., Beijing 100193 (CN)
(72) Inventor: XU, Xiaole, Beijing 100193 (CN); SUN, Jinhou, Beijing 100193 (CN); LUO, Wen, Beijing 100193 (CN); CUI, Wei, Beijing 100193 (CN); LI, Yulong, Beijing 100193 (CN); HU, Zhilin, Beijing 100193 (CN); MEI, Zhe, Beijing 100193 (CN); YANG, Ping, Beijing 100193 (CN)
(74) Representative: Gosnall, Toby
(86) International application number: PCT/CN2016/073551
(87) International publication number: WO 2016/127917

(57) **Abstract**

A system for pushing orders is disclosed. The system may include: a computer readable storage medium configured to store an executable module, comprising a service requester interface configured to: acquire at least one first order and information related to the first order, comprising geographic and time information related to the first order; and acquire at least one second order and information related to the second order, comprising geographic and time information related to the second order; a processing module configured to filter the second order based on the information related to the first order and the second order to generate at least one filtered second order; a service provider interface configured to send the filtered second order; and a processor configured to implement the executable module. Also disclosed herein are a method of pushing orders and a method of using a system for pushing orders.

## Description

### CROSS-REFERENCE TO RELATED APPLICATIONS

The application claims priority to Chinese Application No. 201510070493.0, filed on February 10, 2015, Chinese Application No. 201510109403.4, filed on March 10, 2015, and Chinese Application No. 201510516211.5, filed on August 20, 2015, the entire contents of each of which are hereby incorporated by reference.

### TECHNICAL FIELD

The present disclosure generally relates to a method and system for pushing orders, and more particularly, to a method and system for pushing orders in an on-demand service system using mobile internet technologies and data processing technologies.

### BACKGROUND

On-demand services and applications have become increasingly popular. For example, with the rapid growth of cities, transportation services are in high demand for people from all sectors of society. Meanwhile, due to rapid development of mobile internet and popularity of smart devices, particularly smart navigation devices and smartphones, transportation service applications are increasingly popular and can bring great convenience to people. Furthermore, if a driver can receive successive orders that are correlated with each other in time and distance, it may reduce idle driving time for the driver, increase vehicle occupancy, and improve user experience.

### SUMMARY

In one aspect of the present disclosure, a system configured to provide information for an on-demand service is provided. The system may include a tangible computer readable storage medium and a processor. The computer readable storage medium may be configured to store an executable module. The processor may be configured to implement the executable module in the computer readable storage medium. The executable module may include a service requester interface, a service provider interface, and a processing module. The service requester interface may obtain at least one first order and information related to the first order. The service requester interface may obtain at least one second order and information related to the second order. The information related to the first order may include geographic information related to the first order and time information related to the first order. The information related to the second order may include geographic information related to the second order and time information related to the second order. The processing module may filter the second order to generate at least one filtered second order based on the information related to the first order and the information related to the second order. The service provider interface may send the filtered second order. The processor may implement the executable module stored in the computer readable storage medium.

In another aspect of the present disclosure, a method of providing information for an on-demand service is provided. The method may include: obtaining at least one first order and information related to the first order. The information related to the first order may include geographic information related to the first order and time information related to the first order; obtaining at least one second order and information related to the second order. The information related to the second order may include geographic information related to the second order and time information related to the second order; filtering the second order based on the information related to the first order and the information related to the second order to generate at least one filtered second order; and sending the filtered second order.

In another aspect of the present disclosure, a tangible and non-volatile computer readable storage medium configured to store information is provided. When information is read by a computer, the computer may implement a method of providing the information for an on-demand service. The method may include: obtaining at least one first order and information related to the first order. The information related to the first order may include geographic information related to the first order and time information related to the first order; obtaining at least one second order and information related to the second order. The information related to the second order may include geographic information related to the second order and time information related to the second order; filtering the second order based on the information related to the first order and the information related to the second order to generate at least one filtered second order; and sending the filtered second order.

According to some embodiments of the present disclosure, the geographic information related to the first order may include information of a first departure location and/or a first destination. The time information related to the first order may include information of a first pickup time and/or a first estimated arrival time of the first order. The geographic information related to the second order may include information of a second departure location and/or a second destination of the second order. The time information related to the second order may include information of a second pickup time and/or a second estimated arrival time of the second order.

According to some embodiments of the present disclosure, the filtering of the second order may include: determining a distance between the first destination and the second departure location; and selecting the filtered second order such that the distance between the second departure location and the first destination is less than a threshold distance.

According to some embodiments of the present disclosure, the method of provide information for the on-demand service may further include: determining a first time length for completing the first order; determining a first time duration based on the first destination and the second departure location; determining a first time interval between the second pickup time and the first pickup time; acquiring a first time difference based on the first time interval, the first time length, and the first time duration; and selecting the filtered second order based on the first time difference and a first threshold time.

According to some embodiments of the present disclosure, the first time length for completing the first order may be determined based on a driving speed of a historical order.

According to some embodiments of the present disclosure, the first time length may be determined based on an amount of time adjustment.

According to some embodiments of the present disclosure, the filtering of the second order may include: obtaining a current time and a current location of a service provider; and selecting the filtered second order with a second pickup time earlier than the first pickup time.

According to some embodiments of the present disclosure, the method of providing information for the on-demand service may further include: determining a second time duration based on the current location of the service provider and the second departure location; determining a second time length for completing the second order; determining a third time duration from the destination of the second order to the first departure location; determining a second time interval between the second pickup time and the current time; determining a second time difference based on the second time interval, the second time length, the second time duration, and the third time duration; and selecting the filtered second order based on the second time difference and a second threshold time length.

According to some embodiments of the present disclosure, the second time length for completing the second order may be determined based on a driving speed of a historical order.

According to some embodiments of the present disclosure, the second time length may be determined based on an amount of time adjustment.

According to some embodiments of the present disclosure, the amount of time adjustment may be acquired based on an estimated completion time of the historical order and an actual completion time of the historical order.

In another aspect of the present disclosure, a method of using a system for pushing orders is provided. The method may include: sending location information related to a terminal and time information related to the terminal to a system for pushing orders by the terminal; and receiving a filtered order generated by the system for pushing orders at the terminal. According to some embodiments of the present disclosure, the method may further include sending a response to the filtered order to the system by the terminal. According to some embodiments of the present disclosure, the terminal may include a driver terminal device.

In another aspect of the present disclosure, a method of using a system for pushing orders is provided. The method may include: sending location information and time information related to an order to a system for pushing orders by a terminal; receiving a filtered order generated by the system in the terminal. According to some embodiments of the present disclosure, the terminal may include a passenger terminal device.

### BRIEF DESCRIPTION OF THE DRAWINGS

The present disclosure is further described in terms of schematic embodiments. These schematic embodiments are described in detail with reference to the drawings. The drawings are not to scale. These embodiments are non-limiting schematic embodiments, in which like reference numerals represent similar structures throughout the several views of the drawings, and wherein:
FIG. 1-A illustrates a schematic diagram of a network environment containing an on-demand service system according to some embodiments of the present disclosure;
FIG. 1-B illustrates a schematic diagram of a network environment containing an on-demand service system according to another embodiment of the present disclosure;
FIG. 2 is a schematic diagram of an on-demand service system according to some embodiments of the present disclosure;
FIG. 3 is a schematic diagram of a processing module of an order pushing engine according to some embodiments of the present disclosure;
FIG. 4-A is a schematic diagram of a passenger interface of an order pushing engine according to some embodiments of the present disclosure;
FIG. 4-B is a schematic diagram of a driver interface in the order pushing engine according to some embodiments of the present disclosure;
FIG. 5 is a schematic diagram of a user terminal device according to some embodiments of the present disclosure;
FIG. 6 is a schematic diagram of a database according to some embodiments of the present disclosure;
FIG. 7 is a schematic flow chart of a process for filtering orders by the order pushing engine 110 according to some embodiments of the present disclosure;
FIG. 8-A is a flow chart of an example of a process for filtering orders according to some embodiments of the present disclosure;
FIG. 8-B is a flow chart of an example of a process for filtering orders according to another embodiment of the present disclosure;
FIG. 9 is a flow chart illustrating an example of a process for combining orders by an order pushing engine according to some embodiments of the present disclosure;
FIG. 10 is a flow chart of an exemplary process for pushing orders using an order pushing engine according to some embodiments of the present disclosure;
FIG. 11 is a flow chart of a process for pushing orders according to some embodiments of the present disclosure;
FIG. 12 illustrates a structure of a mobile device that is configured to implement a specific system disclosed in the present disclosure; and
FIG. 13 illustrates a structure of a computing device that is configured to implement a specific system disclosed in the present disclosure.

### DETAILED DESCRIPTION

In order to illustrate the technical solutions related to the embodiments of the present disclosure, brief introduction of the drawings referred to in the description of the embodiments is provided below. Obviously, drawings described below are only some examples or embodiments of the present disclosure. Those having ordinary skills in the art, without further creative efforts, may apply the present disclosure to other similar scenarios according to these drawings. Unless stated otherwise or obvious from the context, the same reference numeral in the drawings refers to the same structure and operation.

As used in the disclosure and the appended claims, the singular forms "a," "an," and "the" include plural referents unless the content clearly dictates otherwise. It will be further understood that the terms "comprises," "comprising," "includes," and/or "including" when used in the disclosure, specify the presence of stated steps and elements, but do not preclude the presence or addition of one or more other steps and elements.

Some modules of the system may be referred to in various ways according to some embodiments of the present disclosure, however, any amount of different modules may be used and operated in a client terminal and/or a server. These modules are intended to be illustrative, not intended to limit the scope of the present disclosure. Different modules may be used in different aspects of the system and method.

According to some embodiments of the present disclosure, flow charts are used to illustrate the operations performed by the system. It is to be expressly understood, the operations above or below may or may not be implemented in order. Conversely, the operations may be performed in inverted order, or simultaneously. Besides, one or more other operations may be added to the flowcharts, or one or more operations may be omitted from the flowchart.

Embodiments of the present disclosure may be applied to different transportation systems including but not limited to land transportation, sea transportation, air transportation, space transportation, the like, or any combination thereof. A vehicle of the transportation systems may include a rickshaw, travel tool, taxi, chauffeured car service, hitch, bus, rail transportation (e.g., a train, a bullet train, high-speed rail, and subway), ship, airplane, spaceship, hot-air balloon, driverless vehicle, the like, or any combination thereof. The transportation system may also include any transportation system that applies management and/or distribution, for example, a system for sending and/or receiving an express. The application scenarios of different embodiments of the present disclosure may include but is not limited to one or more webpages, browser plugins and/or extensions, client terminals, custom systems, intracompany analysis systems, artificial intelligence robots, the like, or any combination thereof. It should be understood that application scenarios of the system and method disclosed herein are only some examples or embodiments. Those having ordinary skills in the art, without further creative efforts, may apply these drawings to other application scenarios. For example, other similar user order receiving system.

The term "user," "passenger," "requester," "service requester," and "customer" in the present disclosure are used interchangeably to refer to an individual, an entity or a tool that may request or order a service. The party may be an individual or device. Also, the term "driver," "provider," "service provider," and "supplier" in the present disclosure are used interchangeably to refer to an individual, an entity, or a device that may provide a service or facilitate the providing of the service. In addition, the term "user" in the present disclosure may refer to an individual, an entity, or a device that may request a service, order a service, provide a service, or facilitate provision of the service.

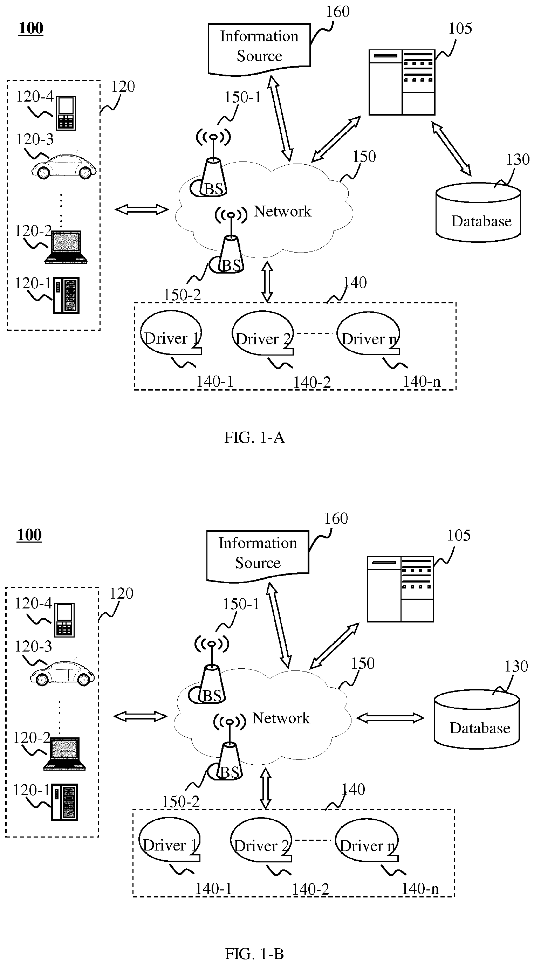

FIG. 1-A illustrates a schematic diagram of a network environment containing an on-demand service system according to some embodiments of the present disclosure. The network environment 100 may include an on-demand service system 105, one or more passenger terminal devices 120, one or more databases 130, one or more driver terminal devices 140, one or more networks 150, and one or more information sources 160. The on-demand service system 105 may include an order pushing engine 110. For convenience, the order pushing engine may be referred to as an order pushing system. A system in the present disclosure may be referred to as an on-demand order service system, an order pushing engine, or an order pushing system. In some embodiments, the order pushing engine 110 may be a system configured to analyze the collected information to generate an analytical result. The order pushing engine 110 may be a server, or a server group connected via a wired or wireless network. The server group may be centralized (e.g., a data center) or distributed (e.g., a distributed system). The order pushing engine 110 may be centralized or distributed.

In the present disclosure, "passenger," "passenger terminal," and "passenger terminal device," may be used interchangeably. In the present disclosure, "driver," "driver terminal," and "driver terminal device" may be used interchangeably. Each of the passenger terminal 120 and the driver terminal 140 may be referred to as a user. Each of the passenger terminal 120 and the driver terminal may be an individual, a device, or other entity directly relating to service orders, such as a service requester and a service provider respectively. A passenger may be a service requester. The passenger may also include a user of the passenger terminal device 120. In some embodiments, the user of the passenger terminal device is not the passenger himself. For example, a user A of the passenger terminal device 120 may request an on-demand service, accept an on-demand service, or receive other information or instructions sent by the on-demand service system 105 for a passenger B by using the passenger terminal device 120. The user of the passenger terminal device 120 may also be referred to as a passenger in the present disclosure. A driver may be a service provider. The driver may include a user of the driver terminal device 140. In some embodiments, the user of the driver terminal device is not the driver himself. For example, a user C of the driver terminal device 140 may accept an on-demand service or receive other information or instructions sent by the on-demand service system 105 for a driver D using the driver terminal device 140. The user of the driver terminal device 140 may also be referred to as a driver in the present disclosure. In some embodiments, the passenger terminal 120 may include a desktop computer 120-1, a laptop computer 120-2, a built-in device of a vehicle 120-3, a mobile device 120-4, the like, or any combination thereof. Herein, the built-in device 120-3 may be a carputer, or the like. The mobile device 120-4 may be a smartphone, a personal digital assistance (PDA), a tablet computer, a handheld gaming device, smart glasses, a smartwatch, a wearable device, a virtual reality device, an augmented reality device (e.g., Google™ Glass, Oculus Rift™, HoloLens™, Gear™ VR, etc.), the like, or any combination thereof. The driver terminal device 140 may also include one or more similar devices described above.

The order pushing engine 110 may directly access information stored in the database 130 and/or read information from or write information to the database 130. The order pushing engine 110 may also access information provided by the user terminal device 120 or 140 via the network 150. In some embodiments, the database 130 may include any device that is capable of storing data. The database 130 may be used to store data that are collected from the passenger 120 and/or the driver 140, and data that are used, generated and outputted by the order pushing engine 110. The database 130 may be local or remote. The database 130 and the on-demand service system 105 and/or one or more portions of the system 105 (e.g., the order pushing engine 110) may be connected via one or more wired and/or wireless communication links.

The network 150 may be a single network or a combination of networks. For example, the network 150 may include a local area network (LAN), a wide area network (WAN), a public network, a private network, a proprietary network, a public switched telephone network (PSTN), the Internet, a wireless network, a virtual network, or any combination thereof. The network 150 may include multiple network access points, such as a wired or wireless access point, including a base station 150-1, a base station 150-2, a network switched point, etc. Through these access points, any data source may be connected to the network 150 and transmit information via the network 150. Merely for illustration, the driver terminal device 140 in a transportation service is taken as an example, and it is not intended to limit the scope of the present disclosure. The driver terminal device 140 may be a mobile phone, a tablet computer, etc. The network environment 100 of the driver terminal device 140 may be a wireless network (e.g., Bluetooth network, wireless local area network (WLAN), Wi-Fi, WiMax, etc.), a mobile network (e.g., 2G, 3G, 4G, etc.), or other communication methods (e.g., virtual private network (VPN), shared network, nearfield communication (NFC), ZigBee, etc.).

The information source 160 may be a source configured to provide other information to the system 105. For example, the information source 160 may provide the system with service information, such as weather conditions, traffic information, information of laws and regulations, news events, life information, life guide information, or the like. The information source 160 may be implemented using a single central server, multiple servers connected via a network, multiple personal devices, etc. When the information source is implemented using multiple personal devices, the personal devices can generate content (e.g., as referred to as the "user-generated content"), for example, by uploading text, voice, image and video to a cloud server. An information source may thus be generated by the multiple personal devices and the cloud server.

Taking a transportation service as an example, the information source 160 may include a municipal service system containing map information and city service information, a real-time traffic broadcasting system, a weather broadcasting system, a news network, a social network, or the like. The information source 160 may be a physical device, such as a common speed measuring device, a sensor, or an IOT (Internet of things) device, including a vehicle speedometer, a radar speedometer, a temperature and humidity sensor, etc. The information source 160 may be a source configured to obtain news, messages, real-time road information, or the like. For example, the information source 160 may be a network information source that includes an Internet news group based on Usenet, a server over the Internet, a weather information server, a road condition information server, a social network server, the like, or any combination thereof. Taking food delivery service as an example, the information source 160 may be a system storing information of multiple food providers in a particular region, a municipal service system, a real-time traffic broadcasting system, a weather broadcasting system, a news network, a rules system storing laws and regulations of the district, a local social network system, the like, or any combination thereof. The examples described herein are not intended to limit the scope of the information source or the type of services provided by the information source. Any device or network that can provide information of the services may be designated as an information source in the present disclosure.

In some embodiments, the on-demand service system 105 and different sections in the network environment 100 may be communicated based on orders. In the present disclosure, "service," "order," or "service order" may refer to a specific task or transaction that is performed or implemented by an individual or an entity for other individuals or entities. The subject matter of the order may be a product. In some embodiments, the product may be a tangible product or an intangible product. The tangible product may be any object with a shape or a size, including food, medicine, commodities, chemical products, electrical appliances, clothing, vehicles, house estates, luxuries, the like, or any combination thereof. The intangible product may include service products, financial products, intellectual products, Internet products, the like, or any combination thereof. The Internet products may include any product that satisfies the user's requirements on information, entertainment, communication, or business. There are many methods of classifying the Internet products. Taking the classification method based on host platform as an example, the Internet products may include personal host products, Web products, mobile Internet products, commercial host platform products, built-in products, the like, or any combination thereof. The mobile Internet product may be a software, a program or a system used in mobile terminals. Herein, the mobile terminal may include but is not limited to a laptop computer, a tablet computer, a mobile phone, a personal digital assistant (PDA), an electronic watch, a POS machine, a carputer, a television, the like, or any combination thereof. And the mobile Internet product may include various software or applications of social communication, shopping, travel, entertainment, learning, or investment used in the computer or mobile phone. The travel software or application may be a trip software or application, a vehicle booking software or application, a map software or application, or the like. The vehicle booking software or application may be used to book horses, carriages, rickshaws (e.g., two-wheeled bicycles, three-wheeled bicycles, etc.), vehicles (e.g., taxis, buses, etc.), trains, subways, ships, aircrafts (e.g., planes, helicopters, space shuttles, rockets, hot air balloons, etc.), the like, or any combination thereof.

FIG. 1-B illustrates a schematic diagram of a network environment containing an on-demand service system according to another embodiment of the present disclosure. FIG. 1-B is similar to FIG. 1-A. In FIG. 1-B, the database 130 is independent, and may be directly connected to the network 150. The on-demand service system 105 and/or one or more portions of the system 105 (e.g., the order pushing engine 110), and/or the user terminal devices 120 or 140 may directly access the database 130 via the network 150.

In FIG. 1-A and/or FIG. 1-B, the database 130 and the on-demand service system 105, and/or one or more portions of the system 105 (e.g., the order pushing engine 110), and/or the user terminal device 120 or 140 may be connected in different ways. The access permission of each device to the database 130 may be limited. For example, the on-demand service system 105 and/or one or more portions of the system 105 (e.g., the order pushing engine 110) may have the highest level of access permission, e.g., permission to read or modify public or personal information in the database 130. The passenger terminal device 120 or the driver terminal device 140 may be permitted to read some of public information or personal information relating to the users when certain conditions are satisfied. For example, the on-demand service system 105 may update or modify the public information or the user related information in the database 130, based on one or more experiences of a user (a passenger or a driver) using the on-demand service system 105. As another example, when receiving a service order from a passenger 120, a driver 140 may view some of the information of the passenger 120 in the database 130. However, the driver 140 may not modify the information of the passenger 120 in the database 130 on his/her own, but may only report the modification to the on-demand service system 105 so that the system 105 may determine whether or not to modify the information of the passenger 120 in the database 130 accordingly. As another example, when receiving a request of providing service from a driver 140, a passenger 120 may view some of the information (e.g., user rating information, driving experiences, etc.) of the driver 140 in the database 130. However, the passenger 120 may not modify the information of the driver 140 in the database 130 on his/her own, but may only report the modification to the on-demand service system 105 so that the system 105 may determine whether or not to modify the information of the driver 140 in the database 130 accordingly.

It should be noted that the above description of the service system based on a location is provided for the purposes of illustration, and not intended to limit the scope of the present disclosure. For persons having ordinary skills in the art, modules may be combined in various ways, or connected with other modules as sub-systems. Various variations and modifications may be conducted under the teaching of the present disclosure. However, those variations and modifications may not depart the spirit and scope of this disclosure. For example, the database 130 may be a cloud computing platform with data storing function that includes but is not limited to a public cloud, a private cloud, a community cloud, a hybrid cloud, etc. All such modifications are within the protection scope of the present disclosure.

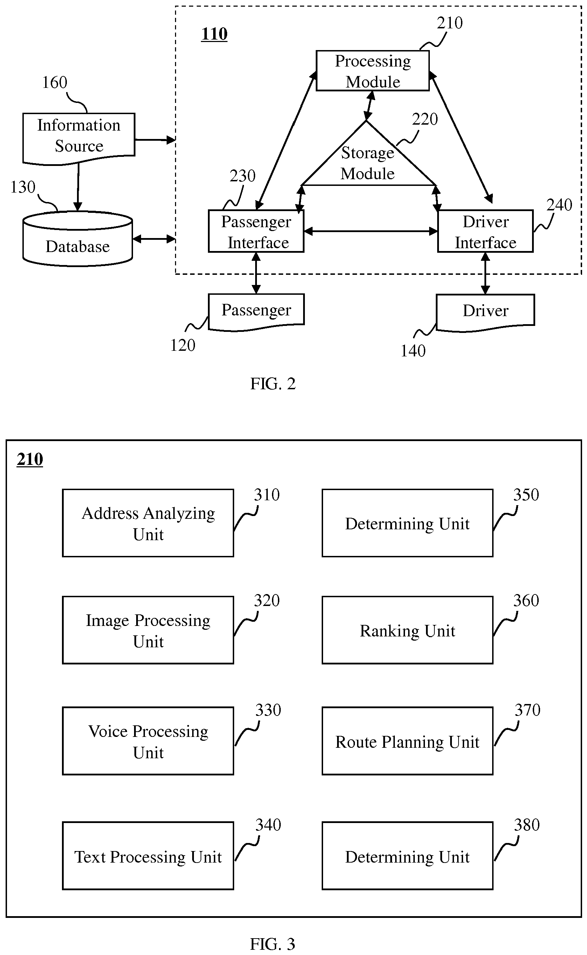

FIG. 2 is a schematic diagram of an on-demand service system according to some embodiments of the present disclosure. For brevity, the on-demand service system 105 is not shown in the figure and the order pushing engine 110 is illustrated as an example. The order pushing engine 110 may include one or more processing modules 210, one or more storage modules 220, one or more passenger interfaces 230, and one or more driver interfaces 240. The order pushing engine 110 may be centralized or distributed. One or more modules of the order pushing engine 110 may be local or remote. In some embodiments, the order processing engine 110 may be a web server, a file server, a database server, an FTP server, an application server, a proxy server, a mail server, the like, or any combination thereof.

In some embodiments, the order pushing engine may receive information from and/or send processed information to the passenger terminal device 120 through the passenger interface 230. In some embodiments, the order pushing engine 110 may receive information from and/or send processed information to the driver terminal device 140 through the driver interface 240. The method of sending or receiving the information may be direct. For example, information may be directly obtained from one or more passenger terminal devices 120 and/or one or more driver terminal devices 140 through the passenger interface 230 and/or the driver interface 240 via the network 150. As another example, information may be directly received from the information source 160. The method of sending or receiving the information may be indirect. For example, the processing module 210 may obtain information by sending a request to one or more information sources 160. The information in the information source 160 may include but is not limited to weather conditions, road conditions, traffic conditions, news events, social activities, the like, or any combination thereof. The order pushing engine 110 may be configured to communicate with the database 130. In some embodiments, the order pushing engine may be configured to extract information such as map data, information of historical orders, information of an amount of time adjustment, etc. The above-mentioned information of historical orders may include departure locations of the historical orders, destinations of the historical orders, pickup times of the historical orders, a price of each of historical orders, the like, or any combination thereof. The information of amount of time adjustment described above may include values of time adjustment for different geographic areas in different time periods. The order pushing engine 110 may be configured to send, to the database 130, information received from the passenger interface 230 and/or the driver interface 240. The processed result of the information obtained by the processing module 210 of the order pushing engine 110 may also be sent to the database 130.

In some embodiments, the processing module 210 may be configured to process related information. The processing module 210 may send the processed information to the passenger interface 230 and/or the driver interface 240. The methods of processing information may include but is not limited to storing, classifying, filtering, converting, calculating, retrieving, predicting, training, the like, or any combination thereof. In some embodiments, the processing module 210 may include but is not limited to a central processing unit (CPU), an application specific integrated circuit (ASIC), an application specific instruction set processor (ASIP), a physics processing unit (PPU), a digital processing processor (DSP), a field-programmable gate array (FPGA), a programmable logic device (PLD), a processor, a microprocessor, a controller, a microcontroller, the like, or any combination thereof.

In some embodiments, the passenger interface 230 and the driver interface 240 may receive information sent by the passenger terminal device 120 and the driver terminal device 140, respectively. The received information may be information about requests for service, information about a current location of a passenger or a driver, information about a text sent by a passenger terminal device 120 or a driver terminal device 140, or any other information sent by the passenger terminal device 120 or the driver terminal device 140 (e.g., uploaded information of images, video content, audio content, etc.). The received information may be stored in the storage module 220, determined and processed by the processing module 210, or sent to the database 130.

In some embodiments, information received by the passenger interface 230 and the driver interface 240 may be sent to the processing module 210. The processing module 210 may then process the information to generate processed information. The information generated by the processing module 210 may be optimized information of the current location of the passenger and/or the driver, information related to a departure location and/or a destination of the order. In some embodiments, the information generated by the processing module 210 may be confirmation information of the location of the passenger and/or the driver, such as whether the location of the passenger or the driver is abnormal. In some embodiments, the information generated by the processing module 210 may include travel methods, an order completion rate with respect to each travel method or a combination of multiple travel methods, the like, or any combination thereof. The travel method may include a chauffeured car service, a hitchhiking, a taxi, a bus, a train, a bullet train, a high-speed rail, a subway, a ship, an airplane, the like, or any combination thereof. In some embodiments, the information generated by the processing module 210 may be information related to trips, which may include the number of trips, the departure location and destination of each trip, the time and cost required to spend on each trip with respect to different travel methods, or the like.

In some embodiments, the information generated by the processing module 210 may be sent to the passenger terminal device 120 and/or the driver terminal device 140 via the passenger interface 230 and/or the driver interface 240. In some embodiments, the information generated by the processing module 210 may be stored in the database 130, the storage module 220, or any other module or unit of the on-demand service system 105 that can store data.

In some embodiments, the database 130 may be configured in the background of the on-demand service system 105 (as shown in FIG. 1-A). In some embodiments, the database 130 may be a stand-alone device and may directly connect with the network 150 (as shown in FIG. 1-B). In some embodiments, the database 130 may be a part of the on-demand service system 105. In some embodiments, the database 130 may be a part of the order pushing engine 110. The database 130 may refer to any device that can store data. The database 130 may be used to store data collected from the user terminal device 120, user terminal device 140, or the information source 160. The database 130 can also store various data generated by the order pushing engine 110. The database 130 or other storage device in the system may refer to any media with a read/write function. The database 130 or other storage device in the system may be an internal device of the system 105 or an external device connected to the system 105. The connection between the database 130 and other storage device in the system may be wired or wireless. The database 130 or other storage device in the system may include but is not limited to a hierarchical database, a network database, a relational database, the like, or any combination thereof.

The database 130 or other storage device of the system may digitize information, and then store the digitalized information in an electrical, magnetic or optical storage device. The database 130 or other storage device of the system may be configured to store various information, such as programs, data, or the like. The database 130 or other storage device of the system may be a device configured to store information in the form of electric energy, e.g., multiple memories, a random-access memory (RAM), a read-only memory (ROM), or the like. The random-access memory may include but is not limited to a dekatron, a selectron, a delay line memory, a Williams tube, a dynamic random access memory (DRAM), a static random access memory (SRAM), a thyristor random access memory (T-RAM), a zero-capacitor random memory (Z-RAM), the like, or any combination thereof. The read-only memory may include but is not limited to a magnetic bubble memory, a magnetic button line memory, a thin film memory, a magnetic plated wire memory, a magnetic-core memory, a magnetic drum memory, a CD-ROM, a hard disk, a tape, an early non-volatile memory (NVRAM), a phase change memory, a magnetic resistance random access memory, a ferroelectric random access memory, a nonvolatile SRAM, a flash memory, an electronic erasable programmable read-only memory, an erasable programmable read-only memory, a programmable read-only memory, a mask ROM, a floating gate connected random access memory, a Nano-RAM, a race-track memory, a variable resistive memory, a programmable metallization memory, or the like, or any combination thereof. The database 130 or other storage device of the system may be a device configured to store information utilizing magnetic energy, such as a hard disk, a soft disk, a tape, a magnetic core storage, a magnetic bubble memory, a USB flash disk, a flash disk, or the like. The database 130 or other storage device of the system may be a device configured to store information by optical method, such as a compact disc (CD), a digital video disc (DVD), or the like. The database 130 or other storage device of the system may be a device configured to store information by magnetooptical method, e.g., magnetic disc, or the like. The method of accessing the database 130 or other storage device of the system 105 may include random access, serial access, read-only access, the like, or any combination thereof. The database 130 or other storage device of the system may be a volatile memory or a nonvolatile memory. It should be noted that the above description of storage devices is provided for the purposes of illustration, and not intended to limit the scope of the present disclosure. The database 130 or other storage devices in the system 105 may be local or remote.

It should be noted that the processing module 210 and/or the database 130 may reside in the user terminal device 120 or 140, or implement corresponding functions via a cloud computing platform. Herein, the cloud computing platform may include but is not limited to a storage-based cloud platform mainly used for data storing, a calculation-based cloud platform mainly used for data processing, a hybrid cloud platform used for both data storing and processing, etc. The cloud platform used by the user terminal 120 or 140 may be a public cloud, a private cloud, a community cloud, a hybrid cloud, or the like. For example, some order information and/or non-order information received by the user terminal device 120 or 140 may be determined and/or stored by the user cloud platform according to actual requirements. Other order information and/or non-order information may be determined and/or stored by a local processing module and/or a system database.

It should be understood that the order pushing engine 110 illustrated in FIG. 2 may be implemented by a variety of methods. For example, the order pushing engine 110 may be implemented by a hardware, a software, or a combination of them. Herein, the hardware may be implemented by a dedicated logic. The software may be stored in the memory, and may be implemented by an appropriate instruction execution system (e.g., a microprocessor, a dedicated design hardware, etc.). It will be appreciated by those skilled in the art that the above methods and systems may be implemented by computer-executable instructions and/or embedding in control codes of a processor. For example, the control codes may be provided by a medium such as a disk, a CD or a DVD-ROM, a programmable memory device such as read-only memory (e.g., firmware), or a data carrier such as an optical or electric signal carrier. The order pushing engine 110 and its modules may not only be implemented by large scale integrated circuits or gate arrays, semiconductor devices (e.g., logic chips, transistors, hardware circuits of programmable hardware devices such as field programmable gate arrays, programmable logic devices, etc.), but may also be implemented by software executed in various types of processors, or a combination of the above hardware circuits and software (e.g., firmware).

It should be noted that the above description of the order pushing engine 110 is provided for the purposes of illustration, and not intended to limit the scope of the present disclosure. For persons having ordinary skills in the art, modules may be combined in various ways, or connected with other modules as sub-systems. Various variations and modifications may be conducted under the teaching of the present disclosure. However, those variations and modifications may not depart the spirit and scope of this disclosure. For example, the processing module 210, the storage module 220, the passenger interface 230, the driver interface 240, and the database 130 may be different modules in one system, or may be combined as a single module to perform the corresponding functions of two or more of the above modules. For example, the passenger interface 230 and the driver interface 240 may be combined as a single interface that can interact with the passenger terminal device 120 and the driver terminal device 140 at the same time. For example, the database 130 may be included in the order pushing engine 110, and all functions of the database 130 and the storage module 220 may be implemented by a single storage device. All such modifications are within the protection scope of the present disclosure.

FIG. 3 is a schematic diagram of a processing module of an order pushing engine according to some embodiments of the present disclosure. The processing module 210 may include address analyzing units 310, image processing units 320, voice processing units 330, text processing units 340, determining units 350, ranking units 360, route planning units 370, and determining units 380. It should be noted that the above descriptions of the structure of the processing module 210 of the order pushing engine 110 are provided for illustration purposes, and not intended to limit the scope of the present disclosure. In some embodiments, the processing module 210 may also include other units. In some embodiments, some of the above units may be removed. In some embodiments, some of the above units may be combined into one unit to perform corresponding functions. In some embodiments, the above units may be independent. In some embodiments, the above units may be interconnected.

The address analyzing unit 310 may be configured to process received address information. The address information may be obtained from the passenger interface 230, the driver interface 240, the database 130, the information source 160, or other units or sub-units of the processing module 210. The methods of processing the address information may include analysis and/or reverse analysis of the address information. The reverse analysis of the address information may include converting one or more coordinates into text description information of a location corresponding to the coordinates. The analysis of the address information may refer to converting text description information of a location (e.g., a text description of the location) into address coordinate information. The address coordinate information may include one or more coordinates in a coordinate system, e.g. longitude-latitude coordinates. The text description information may be one or more of the iconic and representative names of a location, such as a common name, a street number, a name of a landmark of the location, etc. The address analyzing unit 310 may send the processed address information to other units, including but not limited to the image processing unit 320, the voice processing unit 330, the text processing unit 340, the determining unit 350, the ranking unit 360, the route planning unit 370, the determining unit 380, the passenger interface 230, the driver interface 240, the like, or any combination thereof.

The image processing unit 320 may be configured to process a received image (a still image, a video frame, etc.) to obtain processed information. The method of processing may include one or more image processing methods such as image enhancement, image identification, image segmentation, image measurement (e.g. calculation of angles of view, distances, or perspective relations), or the like. The processing unit 320 may receive the image information from the passenger interface 230, the driver interface 240, the database 130, the information source 160, or one or more combinations of other units or sub-units of the processing module 210. The image information identified by the image processing unit 320 may be inputted to the address analyzing unit 310 to search corresponding address information. In some embodiments, the processed results generated by the image processing unit 320 may be sent to the route planning unit 370.

The voice processing unit 330 may be configured to process audio information received from the passenger terminal device 120 and/or the driver terminal device 140. The method of processing may include noise reduction, voice and/or speech recognition, semantic recognition, person recognition, or the like. The voice processing unit 330 may output the recognized audio information to other unit for processing. For example, the voice processing unit 330 may send the recognized address information to the address analyzing unit 310, the route planning unit 370, or the like. The voice processing unit 330 may convert non-audio information (e.g., text information from other units of the processing module 210, the passenger interface 230, the driver interface 240, or the like) to audio information.

The text processing unit 340 may be configured to process text information received by the processing module 210. In some embodiments, the text information may be processed by word segmentation, extracting characteristic text from text information, classifying the characteristic text, semantically recognizing the text information, the like, or any combination thereof. In some embodiments, the text processing unit 340 may be configured to process (e.g. perform a deletion operation, etc.) the content of the text information that satisfies a particular condition. The text information may be obtained from the passenger interface 230, the driver interface 240, the database 130, the information source 160, the storage module 220, or other units or sub-units of the processing module 210. In some embodiments, results generated by the text processing unit 340 may be sent to other units for further processing. In some embodiments, the results generated by the text processing unit 340 may be sent to the storage module 220 for storage, or the passenger interface 230 or the driver interface 240 for further processing.

The determining unit 350 may determine the relationship between two transportation service orders. In some embodiments, the determining unit 350 may determine a temporal relationship between two orders (e.g., a first order and a second order). In some embodiments, the determining unit 350 may determine a chronological order of the pickup times of the two orders. In some embodiments, the determining unit 350 may determine a chronological order of the pickup time of an order and the arrival time of the other order. In some embodiments, the determining unit 350 may determine a geographic relationship between the two orders. In some embodiments, the determining unit 350 may determine the proximity between the departure location of the first order and the destination of the second order. In some embodiments, the determining unit 350 may determine the proximity between a driving direction relating to one order and a driving direction relating to the other order. The determining unit 350 may determine status of the passenger and/or the driver. In some embodiments, the determining unit 350 may determine accuracy and/or precision of the location information sent by the passenger terminal device 120 and/or the driver terminal device 140. In some embodiments, the determining unit 350 may determine the condition of a vehicle, for example, whether the vehicle is stationary, whether the vehicle is moving, the moving direction of the vehicle, the speed of the vehicle, the acceleration of the vehicle, the like, or any combination thereof. The determination of the condition of the vehicle may be used to determine the required cost of an order by the determining unit 380. In some embodiments, the determining unit 350 may determine the difference between the positioning result obtained by a first positioning technology and the positioning result obtained by a second positioning technology or multiple positioning technologies, wherein the positioning result may be received from the driver terminal device 140. The difference may be determined by the determining unit 380. According to the difference, a determination with respect to whether the positioning information obtained by the first positioning technology is abnormal may be made. According to the determination result, the order pushing engine 110 may be configured to decide whether to send the order information to the driver terminal device 140 and/or other driver terminal devices 140.

The ranking unit 360 may be configured to rank multiple orders based on a particular rule. The particular rule may be a chronological order of the pickup times or arrival times of the orders. In some embodiments, the ranking unit 360 may rank the orders based on a chronological order of the pickup times of multiple orders, and may arrange the multiple orders in a list by pickup time from the earliest to the latest. The driver interface 240 may send the list to the driver terminal device 140 for selection. In some embodiments, based on the pickup time and/or the arrival time of an order, the ranking unit 360 may be configured to rank multiple other orders by pickup time, and arrange the multiple other orders in a list by pickup time in a chronological order. The driver interface 240 may send the list to the driver terminal device 140 for selection. The ranking unit 360 may also be configured to rank the received information based on a particular rule. The rule may be a probability, a distance, a time sequence, an amount of spent time, a required cost, the number of employed methods of traveling, the like, or any combination thereof. The processed information may be obtained from the determining unit 380. In some embodiments, the ranking unit 360 may rank candidate departures and/or destinations of an order based on the number of occurrences or probability of the departure and/or the destination of historical orders, and send the order to the passenger terminal device 120 and/or the driver terminal device 140 for selection based on the number of occurrences from high to low. In some embodiments, the ranking unit 360 may rank travel methods and/or routes based on the cost required. In some embodiments, the ranking unit 360 may rank the travel methods and/or the routes based on the time spent. The results may be ranked in an ascending order or a descending order. In some embodiments, the ranking unit 360 may output some or all of the information involved in the ranking.

The route planning unit 370 may determine and plan a travel route of the passenger and a driving route from the driver to the passenger based on the positioning information from the passenger terminal device 120 and the driver terminal device 140. The route planning unit 370 may arrange routes based on information from other units. Said other units may include an address analyzing unit 310, an image processing unit 320, a voice processing unit 330, a ranking unit 360, a determining unit 380, the like, or any combination thereof. In some embodiments, the route planning unit 370 may plan routes based on information from the database 130 and/or the information source 160. In some embodiments, the route planning unit 370 may comprehensively analyze and process information of historical orders, map data, amounts of time adjustment received from the database 130 and information related to service received from the information source 160. After analyzing and processing the information, the route planning unit 370 may generate various routes for the passenger and/or the driver to select. The historical orders may include departure locations of the historical orders, destinations of the historical orders, transaction times of the historical orders (e.g. the time when the order is accepted by both the driver and the passenger), an order completion rate, costs, the like, or any combination thereof. The map data may include geographic coordinates of artificial objects, such as streets, bridges, buildings, etc., geographic coordinates of natural landscapes, such as various water areas, mountains, forests, wetlands, etc., and descriptive names or identifiers (e.g. the number of a street, the name of a mansion, the name of a river, the name of a store, etc.), image information, three-dimensional models, or the like, of the objects described above. The information related to service may include weather information, traffic information, information of laws and regulations, news events, life information, life guide information, the like, or any combination thereof. Results generated by the route planning unit 370 (e.g. routes) may be sent to the passenger terminal device 120 and/or the driver terminal device 140 via the passenger interface 230 and/or the driver interface 240, respectively. In some embodiments, the results generated by the route planning unit 370 may be sent to the ranking unit 360 for processing to generate a result with a particular order, a rank of scores, or a priority.

The determining unit 380 may be configured to determine received information. The information may be received from the passenger interface 230, the driver interface 240, the database 130, the information source 160, or other units or sub-units of the processing module 210 (e.g., the address analyzing unit 310, etc.). The received information may include a distance, time, an order turnover rate, cost required, the like, or any combination thereof. In some embodiments, the determining unit 380 may determine a distance between a departure location of an order and a destination of another order. In some embodiments, the determining unit 380 may be configured to determine the estimated driving time from the departure to the destination of an order. In some embodiments, the determining unit 380 may be configured to determine an estimate of driving time from a driver's current location to a departure location of an order. In some embodiments, the determining unit 380 may be configured to determine the driving time, the driving distance and the average driving speed of a driver in historical orders from one location to another location in the route of an order. In some embodiments, the determining unit 380 may be configured to determine the probability of a historical driving route. In some embodiments, the determining unit 380 may be configured to determine the probability of occurrences of the departure location and/or destination of a historical order. In some embodiments, the determining unit 380 may be configured to determine a distance between a passenger's current location and the departure location of a historical order. In some embodiments, the determining unit 380 may be configured to determine the distance, the required time, the required cost, the required walking distance, the like, or any combination thereof, from the departure location to the destination of an order. In some embodiments, the determining unit 380 may send the determined results to one or more other units, e.g., the ranking unit 360, the route planning unit 370, or the like.

It should be noted that the above descriptions of the processing module 210 of the order pushing engine 110 are provided for the purposes of illustration, and not intended to limit the scope of the present disclosure. For persons having ordinary skills in the art, modules may be combined in various ways, or connected with other modules as sub-systems. Various variations and modifications may be conducted under the teaching of the present disclosure and on the condition that above functions are realized. However, those variations and modifications may not depart the spirit and scope of this disclosure. For example, in some embodiments, the processing module 210 may include an independent accounting unit configured to determine the cost required for completing the order. In some embodiments, some units such as the text processing unit 340 may be omitted. In some embodiments, the processing module 210 may include other units or sub-units. All such modifications are within the protection scope of the present disclosure.

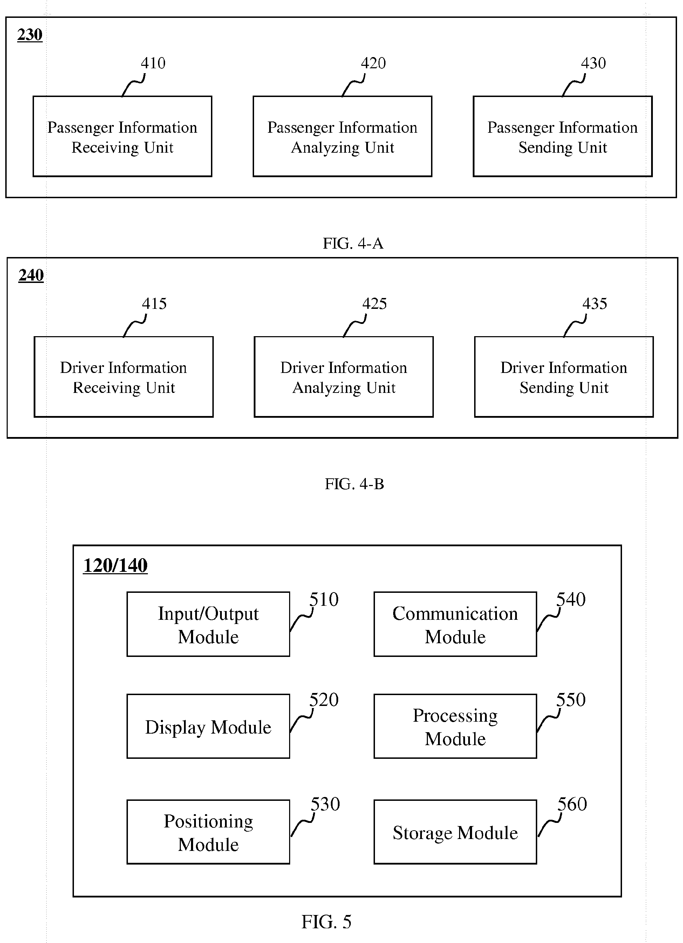

FIG. 4-A is a schematic diagram of a passenger interface of an order pushing engine according to some embodiments of the present disclosure. The passenger interface 230 may include a passenger information receiving unit 410, a passenger information analyzing unit 420, and a passenger information sending unit 430. The passenger information receiving unit 410 may receive information sent by the passenger terminal device 120, and may recognize, arrange and classify the information. The content of the information sent by the passenger terminal device 120 may relate to the current location of a passenger terminal device 120 determined by using a positioning technology, a current location or departure location inputted or selected by the passenger, or other information related to the current location of the passenger. The content of the information sent by the passenger terminal device 120 may also relate to the current time of the system, the pickup time/arrival time/travel time expected by the passenger, the selection/requirement/description information of the passenger regarding the service, the content/format/time/amount of the information that the passenger expects to receive, etc. The content of the information sent by the passenger terminal device 120 may also relate to whether a passenger opens a service application in the passenger terminal device 120. In some embodiments, the passenger information receiving unit 410 may receive a real-time transportation service order from the passenger terminal device 120. In some embodiments, the passenger information receiving unit 410 may receive a future transportation service order from the passenger terminal device 120. The information sent by the passenger terminal device 120 may be text information in natural language inputted by the passenger in the passenger terminal device 120, or binary information sent by the passenger terminal device 120. The information sent may be voice information (including voice inputs of the passenger) recorded in the input/output module 510 of the passenger terminal device 120, image information (including still images or videos) obtained by the input/output module 510 of the passenger terminal device 120 (as shown in FIG. 5), the like, or any combination thereof. The passenger terminal device 120 may provide the information to the passenger information receiving unit 410 of the passenger interface 230 via the network 150.

The passenger information analyzing unit 420 may be configured to analyze the passenger information received by the passenger information receiving unit 410. The analysis may include arranging or classifying the passenger information. The analysis may also include converting the format or extracting, analyzing or converting the content of the passenger information into a format that can be determined, processed, or stored by the processing module 210 or the storage module 220. The passenger information analyzing unit 420 may also convert the format of information processed by the processing module 210 or stored in the storage module 220 into a format that can be accessed or selected by the passenger terminal device 120 based on the instructions or preferences of the passenger terminal device 120. The passenger information analyzing unit 420 may provide the format-converted information to the passenger information sending unit 430.

The passenger information sending unit 430 may send information (e.g., information that the order pushing engine 110 requires to send, to the passenger terminal device 120) to the passenger terminal device 120 via the network 150. In some embodiments, the passenger information sending unit 430 may send a transportation service confirmation that requires the passenger terminal device 120 to confirm the transportation service information sent previously. The information sent by the passenger information sending unit 430 may be the information of the transportation service order of the passenger that has been confirmed by the on-demand service system 105 and/or one or more portions of the system 105 (e.g., the order pushing engine 110). The information sent may also include a traffic condition of the location of the passenger or any other information of the location of the passenger. The information sent may also be the prompt messages or notifications from the system 105 and/or one or more portions of the system 105 (e.g., the order pushing engine 110), the news/notifications/prompt messages from the information source 160, the responses (acceptance, rejection, etc.) of one or more drivers to the transportation service order of the passenger, the like, or any combination thereof. In some embodiments, the passenger information sending unit 430 may send a response of acceptance of the transportation service order of the passenger from one or more drivers to the passenger terminal device 120. The passenger information sending unit 430 may also send driver information to the passenger terminal device 120. The information sent by the passenger information sending unit 430 may be text information in natural language, binary information generated by the order pushing engine 110, voice information (including any voice generated by the text-to-speech of any text in natural language), image information (e.g., a map interface marked with locations of the passenger and one or more drivers), the like, or any combination thereof. The passenger information sending unit 430 may send the above information to the passenger terminal device 120 via the network 150.

The passenger information receiving unit 410 may include a wired or wireless receiving device. The receiving device may communicate with the passenger terminal device 120 via the network 150. Similarly, the passenger information sending unit 430 may include a wired or wireless sending device. The sending device may communicate with the passenger terminal device 120 via the network 150.

FIG. 4-B is a schematic diagram of a driver interface in the order pushing engine according to some embodiments of the present disclosure. As shown in FIG. 4-B, the driver interface 240 may include a driver information receiving unit 415, a driver information analyzing unit 425, and a driver information sending unit 435. The driver information receiving unit 415 may receive information sent by a driver through the driver's device, and may recognize, arrange and classify the information. The content of information sent by the driver may relate to the current location of the driver determined using a poisoning technology. The content of information may also relate to the driving speed of the driver, the departure and/or destination of the driver's current travel, the response or tendency of the driver to the transportation service order, the current service condition (e.g. occupied, waiting to carry passengers, idle driving (e.g. driving without a passenger)) returned by the driver, the selection/confirmation/rejection information of the driver with respect to the service request, the like, or any combination thereof. The content of information may also relate to the information that the driver turns on or off the service application in the driver terminal device 140, or the like. The information sent by the driver terminal device 140 may be text information in natural language and may be inputted by the driver in the driver terminal device 140. The information sent may also be binary information, voice information (including one or more voice inputs of the driver) recorded by the driver terminal device 140, image information (including still images or videos) obtained by the driver terminal device 140, other types of multimedia information, the like, or any combination thereof. The driver terminal device 140 may send the information to the driver information receiving unit 415 of the driver interface 240 via the network 150.

The driver information analyzing unit 425 may be configured to analyze the driver information received by the driver information receiving unit 415. The analysis may include arranging or classifying the driver information. The analysis may include converting the format or extracting, analyzing or converting the content of the driver information into a format that can be determined, processed, or stored by the processing module 210 or the storage module 220. The driver information analyzing unit 425 may also convert the format of the information processed by the processing module 210 or stored in the storage module 220 into a format that can be accessed or selected by the driver terminal device 140 based on the instructions or preferences of the driver terminal device 140. The driver information analyzing unit 425 may provide the format-converted information to the driver information sending unit 435.

The driver information sending unit 435 may send information (e.g., information that the order pushing engine 110 requires to send, to the driver terminal device 140) to the driver terminal device 140 via the network 150, to the driver terminal device 140. The information sent by the driver information sending unit 435 may be the information of the transportation service orders of one or more passengers that has been confirmed by the on-demand service system 105 and/or one or more portions of the system 105 (e.g., the order pushing engine 110). The information sent may also be a traffic condition in surrounding areas of the current location, other information in surrounding areas of the current location. The information sent may also be a traffic condition of the location of the passenger, other information of the location of the passenger. The information sent may also be the prompt messages or notifications from the system 105 and/or one or more portions of the system 105 (e.g., the order pushing engine 110), the news/notifications/prompt messages from the information source 160, the responses (acceptance, rejection, etc.) of other drivers to the transportation service order of the passenger, the like, or any combination thereof. In some embodiments, the driver information sending unit 435 may send the real-time transportation service orders from one or more passenger terminal devices 120 to the driver terminal device 140. In some embodiments, the driver information sending unit 435 may send the future transportation service orders from one or more driver terminal devices 140 to the driver terminal device 140. The information sent by the driver information sending unit 435 may be text information in natural language, or binary information generated by the order pushing engine 110. The information sent may be voice information (including any audio generated by the text-to-speech of any natural language text), image information (e.g., a map interface marked with the locations of the passenger and one or more drivers), the like, or any combination thereof.

The driver information receiving unit 415 may include a wired or wireless receiving device. The receiving device may communicate with the driver terminal device 140 via the network 150. Similarly, the driver information sending unit 435 may include a wired or wireless sending device. The sending device may communicate with the driver terminal device 140 via the network 150.

FIG. 5 is a schematic diagram of a user terminal device according to some embodiments of the present disclosure. Taking the passenger terminal device 120 as an example, the passenger terminal device 120, as shown in FIG. 5, may include an input/output module 510, a display module 520, a positioning module 530, a communication module 540, a processing module 550, and a storage module 560. The passenger terminal device may include more modules or components.

The input/output module 510 may receive one or more types of inputs that the passenger provided to an operating system interface, an image interface of the on-demand service application, a map interface, or an input/output interface. The input/output module 510 may output the information to the passenger in one or more types of output. The input/output module 510 may collect and record one or more types of information such as optics, acoustics, electromagnetics, mechanics, etc. of the passenger or the outside (e.g., the surrounding environment) in the form of still images, videos, audios, mechanical vibrations, etc., by a method such as signal conversion. The input and/or output may be in the form of acoustical signals, optical signals, mechanical vibration signals, the like, or any combination thereof. The display module 520 may display the image interface, the map interface, the input/output operating interface, the operating system interface, or the like, of the on-demand service application. The positioning module 530 may determine the location and/or motion status of the passenger based on one or more positioning/distance measuring technologies. More particularly, for example, the determination of the location or motion status of the passenger may include determining one or more motion parameters such as, the location, a speed, an acceleration, an angular speed, a route, the like, or any combination thereof, of the passenger. The communication module 540 may send or receive the information of the passenger terminal device 120 by a wired or wireless communication. For example, the communication module 540 may communicate with the passenger interface 230 of the order pushing engine 110, so that the passenger terminal device 120 may send information to the order pushing engine 110 or receive information from the order pushing engine 110 via the passenger interface 230. In some embodiments, the passenger terminal device 120 may communicate with the driver terminal device 140 via the communication module 540. For example, the passenger terminal device 120 and the driver terminal device 140 may communicate with each other through Bluetooth® communication and/or infrared communication. A distance between the driver terminal device 140 and the passenger terminal device 120 may be directly measured when the Bluetooth® of both devices are turned on. The processing module 550 may determine, determine, or process the information obtained by the passenger terminal device 120. The storage module 560 may store the information that is obtained, generated, determined, determined, or processed by the input/output module 510, the positioning module 530, the communication module 540, or the processing module 550.

The positioning technology may include but is not limited to Global Position System (GPS) technology, Global Navigation Satellite System (GLONASS) technology, Beidou Navigation System technology, Galileo Positioning System (Galileo) technology, Quasi-Zenith Satellite System (QASS) technology, base station positioning technology, and Wi-Fi positioning technology. The distance measuring technology may include but is not limited to a distance measuring technology based on electromagnetic waves, acoustic waves, the like, or any combination thereof. For example, the distance measuring technology based on electromagnetic waves may utilize radio waves, infrared rays, visible lights, the like, or any combination thereof. The distance measuring technology based on radio waves may utilize Bluetooth® band, or other microwave bands. The distance measuring technology based on infrared rays may utilize near-infrared rays, mid-infrared rays, far-infrared rays, the like, or any combination thereof. The distance measuring technology based on acoustic waves may utilize ultrasonic waves, infrasonic waves, acoustic waves at other frequencies, the like, or any combination thereof. The distance measuring technology based on electromagnetic waves or acoustic waves may measure the distance according to one or more principles. For example, the distance measuring technology based on electromagnetic waves or acoustic waves may rely on a time of wave propagation, the Doppler effect, an intensity of a signal, signal attenuation characteristics, the like, or any combination thereof.

The above description of the passenger terminal device 120 is also applicable to the driver terminal device 140.

It should be noted that the above description of the service system based on the user terminal device 120 or 140 is provided for the purposes of illustration, and not intended to limit the scope of the present disclosure. For persons having ordinary skills in the art, modules may be combined in various ways, or connected with other modules as sub-systems. Various variations and modifications may be conducted under the teaching of the present disclosure. However, those variations and modifications may not depart the spirit and scope of this disclosure. For example, the input/output module 510 and the display module 520 may be different modules in a system, or a single module capable of achieving functions of both modules. As another example, the positioning module 530 and the communication module 540 may be different modules, or a single module integrated in a hardware. All such modifications are within the protection scope of the present disclosure.

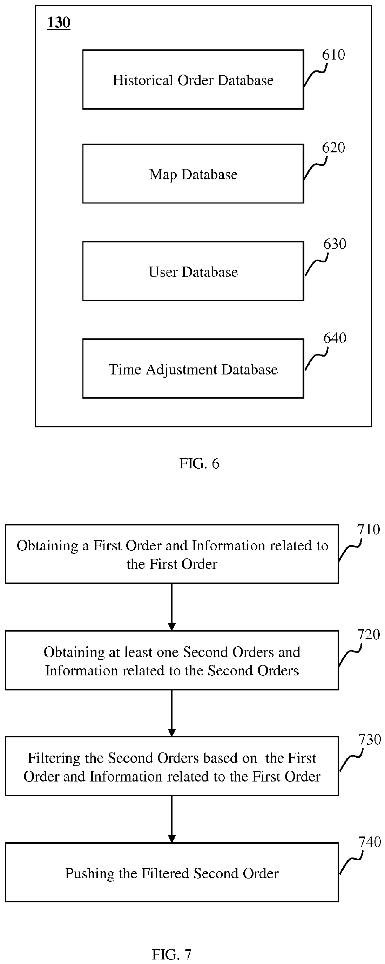

FIG. 6 is a schematic diagram of a database according to some embodiments of the present disclosure. The database 130 may store information of multiple contents. The database 130 may include one or more sub-databases, such as historical order databases 610, map databases 620, user databases 630, time adjustment databases 640, or the like. In some embodiments in which one or more kinds of information are required by the order pushing engine 110 or other modules/units, the information may be extracted from the database 130.

The historical order database 610 may include historical orders of which the content may relate to departures, destinations, types of the departures, types of the destinations, pickup time/arrival time, meeting locations of the passenger and the driver, driving mileage, driving routes, a fare of the order service, tips of the order service, tolls of the order service, a mileage rate of the order service, time-based fare of the order service, driving time, etc. The contents of the historical order may also relate to locations of the passenger/driver and driving speed at different time points during the service, an average driving speed, fuel consumption, fuel consumption per unit distance, the ratings of the passenger and/or the driver to the historical orders, or the like.

The map database 620 may include geographic coordinates of artificial objects such as streets, bridges, buildings, business districts, residential districts, public districts (e.g., parks, zoos, botanical gardens, etc.), or the like. The map database 620 may include geographic coordinates of boundary points of each level of administrative division. The map database 620 may include geographic coordinates of natural landscapes, such as various water areas, mountains, forests, wetlands, or the like. The map database 620 may include descriptive names or identifications of the objects mentioned above (e.g., the number of a street, a mansion, a river, a store, etc.), and geographic coordinates of the boundary points of various geographic divisions. The map database 620 may store other information related to the geographic coordinates. For example, the map database 620 may store areas of the artificial objects and the natural landscapes. The map database 620 may also store areas and populations of each level of the administrative divisions. As another example, the map database 620 may store image information of the artificial objects, the natural landscapes, the administrative divisions, the geographic divisions, or the like.

Information stored in the user database 630 may include information that is related to services of the user 120 or 140, such as a name of an account, a profile image, a displayed name (e.g., a nickname), a documentation number (e.g., a driver license, an ID card, etc.), a registration date, a user level/priority, traffic violation records, driving records (e.g., driving while intoxicated), and information of the vehicles of the driver 140. The user database 630 may store other social information of the user 120 or 140, such as a credit record, a criminal record, an honor or a reward record, or the like. The user database 630 may store profile information of the user 120 or 140, such as age, gender, nationality, address, work place, ethnicity, religious belief, educational attainment, work experience, marital status, physical health status, mental health status, the emotional states, language proficiencies, professional skills, political tendencies, hobbies, favorite music/television programs/movies/books, or the like.

The time adjustment database 640 may be configured to store information of time adjustment. The information of time adjustment may refer to an offset between an actual driving time of an order and an estimated driving time of the order. In some embodiments, the information of time adjustment may relate to a geographic location. In some embodiments, the information of time adjustment may relate to an area in which the geographic location is located. In some embodiments, the information of time adjustment may relate to time. In some embodiments, the information of time adjustment may be determined according to historical orders. Different amounts of time adjustment may be assigned to the same location during different time periods. In some embodiments, an amount of time adjustment of an order may relate to a departure location, a destination, an intermediate location, a time for fulfilling the order, a distance between the departure and the destination, the like, or any combination thereof. In some embodiments in which the departure, the destination, and the driving route of an order are determined, the order pushing engine 110 may search the time adjustment database 640 to obtain the amount of time adjustment of the order.

An amount of time adjustment may represent a time difference between an estimated driving time and an actual driving time of a travel or a trip. In some embodiments, the amount of time adjustment may be used to correct or adjust the estimated driving time to a value closer to the actual driving time. In some embodiments, the amount of time adjustment may be determined as a difference between the estimated driving time and the actual driving time. The amount of time adjustment may be positive, negative, or zero. In some embodiments, the amount of time adjustment may be determined as a ratio of the estimated driving time to the actual driving time. The amount of time adjustment may be greater than, less than, or equal to 1. In some embodiments, the amount of time adjustment may be related to a geographic area, or a time period.

It should be noted that the above descriptions of the database 130 are only provided for the purposes of illustration, and not intended to limit the scope of the present disclosure. For persons having ordinary skills in the art, modules may be combined in various ways, or connected with other modules as sub-systems. Various variations and modifications may be conducted under the teaching of the present disclosure and on the condition of realizing all functions above. However, those variations and modifications may not depart the spirit and scope of this disclosure. For example, in some embodiments, the database 130 may include other databases or sub-databases. All such modifications are within the protection scope of the present disclosure.

FIG. 7 is a schematic flow chart of a process for filtering orders by the order pushing engine 110 according to some embodiments of the present disclosure. In step 710, the order pushing engine 110 may obtain a first order and information related to the first order. The first order and the information related to the first order may be obtained from one or more passenger terminal devices 120 and/or one or more information sources 160. The first order may be a real-time order or a non-real-time order. In some embodiments, the first order may be a future order that has a preset pickup time and the preset pickup time has been received by the driver terminal device 140. The information related to the first order may include but is not limited to the information such as device information, passenger information, time information, geographic information, the like, or any combination thereof of the first order.

In some embodiments, the device information related to the first order may include an identification of the passenger terminal device 120 that requests the first order. In some embodiments, the identification may be unique. For example, the unique identification of the passenger terminal device 120 may include but is not limited to international mobile station equipment identity (IMEI), media access control (MAC) address of a mobile equipment, the like, or any combination thereof. It should be noted that the unique identification of a mobile equipment is not limited to the identifications described above. The unique identification may include any other suitable identifications that are known in this field or may be developed in the future, including but not limited to mobile equipment identifier (MEID), electronic serial numbers (ESN), international mobile subscriber identity (IMSI), the like, or any combination thereof.

In some embodiments, the passenger information related to the first order may include profile information, social information, etc. of the passenger that requests the first order. The profile information of the passenger may include but is not limited to age, gender, nationality, address, work place, physical health status, mental health status, language proficiencies, professional skills, the like, or any combination thereof. The social information of the passenger may include marital status, the emotional states, ethnicity, religious belief, work experience, educational attainment, political tendencies, credit records, criminal records, honor or reward records, hobbies, favorite music/television programs/movies/books, the like, or any combination thereof.

In some embodiments, the time information related to the first order may include the first order's pickup time information, arrival time information, and driving time information. In some embodiments, the pickup time information may be a current time, a pickup time designated by the passenger, an actual pickup time, or the like. In some embodiments, the arrival time information may be an arrival time designated by the passenger, an estimated arrival time, an actual arrival time, or the like. In some embodiments, the driving time information may be an actual time for completing the first order, the driving time estimated by the system 105 and/or one or more portions of the system 105 (e.g., the order pushing engine 110), the driving time estimated by a third party (e.g., a map software or application of a third party), the driving time expected by the passenger, or the like.

In some embodiments, the geographic information related to the first order may include departure location information, destination information, route information, or any other information related to the first order. In some embodiments, the departure location information may be a departure location designated or selected in the passenger terminal device 120 by the passenger, an actual departure location of the first order, or the like. In some embodiments, the destination information may be a destination designated or selected in the passenger terminal device 120 by the passenger, an actual destination of the first order, or the like. In some embodiments, the route information may be a driving route designated or suggested by the passenger and/or the driver, a driving route recommended by the system 105 and/or one or more portions of the system 105 (e.g., the order pushing engine 110), a driving route recommended by a third party (e.g., a map software or application of a third party), an actual driving route, or the like.

In step 720, the order pushing engine 110 may obtain a second order and information related to the second order via the network 150. The second order and information related to the second order may be provided by one or more passenger terminal devices 120, or one or more information sources 160. The second order may be a single order, or a set of single orders. The second order may be a real-time order or a non-real-time order. In some embodiments, the second order may be a future order that has a designated pickup time. In some embodiments, the second order may be an order to be filtered or pushed. The information related to the second order may include but is not limited to the information such as device information, passenger information, time information, geographic information, the like, or any combination thereof of the second order.

In some embodiments, the device information related to the second order may include an identification of the passenger terminal device 120 that requests the second order. In some embodiments, the identification may be unique. For example, the unique identification of the passenger terminal device 120 may include but is not limited to international mobile station equipment identity, media access control (MAC) address of a mobile equipment, the like, or any combination thereof. It should be noted that the unique identification of a mobile equipment is not limited to the identification described above. The unique identification may include any other suitable identifications that are known in this field or may be developed in the future, including but are not limited to mobile equipment identifier (MEID), electronic serial numbers (ESN), international mobile subscriber identity (IMSI), the like, or any combination thereof.

In some embodiments, the passenger information related to the second order may include profile information, social information, etc. of the passenger that requests the second order. The profile information of the passenger may include but is not limited to age, gender, nationality, address, work place, physical health status, the mental health status, language proficiencies, professional skills, the like, or any combination thereof. The social information of the passenger may include marital status, emotional states, ethnicity, religious belief, work experience, educational attainment, political tendencies, credit records, criminal records, honor or reward records, hobbies, favorite music/television programs/movies/books, the like, or any combination thereof.

In some embodiments, the time information related to the second order may include pickup time information, arrival time information, and driving time information related to the second order. In some embodiments, the pickup time information may be a current time, a pickup time designated by the passenger, an actual pickup time, or the like. In some embodiments, the arrival time information may be an arrival time designated by the passenger, an estimated arrival time, an actual arrival time, or the like. In some embodiments, the driving time information may be an actual time for completing the second order, the driving time estimated by the system 105 and/or one or more portions of the system 105 (e.g., the order pushing engine 110), the driving time estimated by a third party (e.g., a map software or application of a third party), the driving time that the passenger expects, or the like.

In some embodiments, the geographic information related to the second order may include departure information, destination information, route information, or any other information related to the second order. In some embodiments, the departure location information may be a departure location designated or selected in the passenger terminal device 120 by the passenger, an actual departure location of the second order, or the like. In some embodiments, the destination information may be a destination designated or selected in the passenger terminal device 120 by the passenger, an actual destination of the second order, or the like. In some information, the route information may be a driving route designated or suggested by the passenger and/or the driver, a driving route recommended by the system 105 and/or one or more portions of the system 105 (e.g., the order pushing engine 110), a driving route recommended by a third party (e.g. a map software or application of the third party), an actual driving route, or the like.

In some embodiments, the type of the information related to the second order may be the same as the type of the information related to the first order. For example, the information related to the second order and the first order may include information of departure location, destination, pickup time, arrival time, driving time, the like, or any combination thereof.

In some embodiments, the type of the information related to the second order may be different from the type of the information related to the first order. For example, the information related to the second order may include information of the departure and the pickup time. The information related to the first order may include information of the departure, the destination, the pickup time, the arrival time, the driving time, or the like.

It should be noted that the passenger of the second order and the passenger of the first order may be the same or different. In some embodiments, the second order may include only one order. In some embodiments, the second order may include multiple different orders.

It should be noted that the descriptions of obtaining the second order and information related to the second order by the order pushing engine 110 are provided for the purposes of illustration, and not intended to limit the scope of the present disclosure. For persons having ordinary skills in the art, various variations and modifications may be conducted under the teaching of the present disclosure and on the condition that the all of above functions are realized. However, those variations and modifications may not depart the spirit and scope of this disclosure. For example, in some embodiments, the order pushing engine 110 may obtain the first order, the second order, and the information related to the first order and the second at the same time. All such modifications are within the protection scope of the present disclosure.

In step 730, the processing module 210 of the order pushing engine 110 may filter the second orders based on the information related to the first order, to obtain one or more filtered second orders. The second orders may be filtered by the processing module 210 based on one or more criteria. In some embodiments, the criteria may include but are not limited to a proximity of the first order to the second order in geography, time, driving direction, or the like. The above proximity in geography, time, driving direction, etc., may be determined by the determining unit 350 of the processing module 210. The second orders may be filtered by the processing module 210 based on one or more of the above criteria.

In some embodiments, the proximity of the first order to the second order in geography may be based on a distance between the first order and the second order. In some embodiments, the distance between the first order and the second order may refer to a distance between the destination of the first order and the departure location of the second order. In some embodiments, the distance between the first order and the second order may refer to a distance between the departure location of the first order and the destination of the second order.

In some embodiments, the proximity in geography of the first order to the second order may be obtained by comparing and determining the distance between the first order and the second order with a preset threshold distance. For example, if a road distance between the departure of the first order and the destination of the second order is within a particular range (e.g., 3 km), the first order and the second order may be regarded as being close in distance. In some embodiments, the proximity in distance may be obtained by determining based on geographic areas of the two locations (e.g., a destination of the first order and a departure location of the second order, a destination of the second order and a departure location of the first order, etc.). For example, if the destination of the first order and the departure location of the second order are within the same geographic area (e.g., a business district or a residential district), the first order and the second order may be regarded as being close in geography.

In some embodiments, the proximity of the first order to the second order in time may refer to a proximity of the pickup time of the first order to the arrival time of the second order. In some embodiments, the proximity of the first order to the second order in time may refer to the proximity of the arrival time of the first order to the pickup time of the second order. The two orders may be regarded as being close in time when the time interval between the arrival time of the first order and the pickup time of the second order is less than a preset threshold time. The threshold time may be 30 minutes, 20 minutes, 10 minutes, 5 minutes, or the like.

It should be noted that the descriptions of the proximity of the first order to the second order in geography and time are provided for the purposes of illustration, and not intended to limit the scope of the present disclosure. For persons having ordinary skills in the art, various variations and modifications may be conducted under the teaching of the present disclosure and on the condition of realizing all functions above. However, those variations and modifications may not depart the spirit and scope of this disclosure. For example, the distance may be a road distance, a driving distance, or a straight-line distance. As another example, the determination result of the proximity in geography may be a score of the proximity in geography, or an output result of the geography is close or not close.

In some embodiments, the proximity of the first order to the second order in driving direction may refer to the proximity of the driving direction of the first order to the driving direction of the second order during the entire journey. In some embodiments, the proximity of the first order to the second order in driving direction may refer to a proximity of the driving direction of the first order at the pickup time to the driving direction of the second order at the arrival time. In some embodiments, the proximity of the first order to the second order in driving direction may refer to a proximity of the driving direction of the first order at the arrival time to the driving direction of the second order at the pickup time. In some embodiments, the proximity of the first order to the second order in the driving direction may be represented by an angle between the two driving velocities. In some embodiments in which the angle between the driving velocities of the first order at the arrival time and the second order at the pickup time is less than a threshold value, e.g., 0.5 radian, the first order and the second order may be determined to be close in driving directions. For example, if the driver's vehicle locates near the north-to-south side road of the eastern third ring road of Beijing when the first order is completed, and the departure location of the second order also locates near the north-to-south side road of the eastern third ring road of Beijing and the second order requires the vehicle to continue driving south from the destination of the first order, then the driving directions of the two orders may be regarded as being close.

It should be noted that the descriptions of the driving direction are provided for the purposes of illustration, and not intended to limit the scope of the present disclosure. Actually, the determination of the proximity in driving direction may also be based on other factors or variables. For example, the proximity of the first order to the second order in driving direction may be determined based on an angle between the displacement vectors of the first order and the second order during the entire journey. As another example, the proximity of the first order to the second order in driving direction may be determined based on an angle between the displacement vectors of the first order within a period in the ending (for example, 5 minutes, 10 minutes, etc.) and the second order within a period in the beginning (for example, 5 minutes, 10 minutes, etc.). All such modifications are within the protection scope of the present disclosure.

In step 740, the order pushing engine 110 may push the filtered second order(s) to one or more driver terminal devices 140 through the driver interface 240 via the network 150.

It should be noted that the descriptions of pushing the filtered second orders by the order pushing engine 110 are provided for the purposes of illustration, and not intended to limit the scope of the present disclosure. For persons having ordinary skills in the art, various variations and modifications may be conducted under the teaching of the present disclosure and on the condition of realizing all functions above. However, those variations and modifications may not depart the spirit and scope of this disclosure. For example, the order pushing engine 110 may simultaneously send the first order and the filtered second orders to one or more driver terminal devices 140 via the network 150 in step 740. As another example, the order pushing engine 110 may simultaneously send the first order and the filtered second orders to the passenger terminal devices120 related to the second orders in step 740. All such modifications are within the protection scope of the present disclosure.

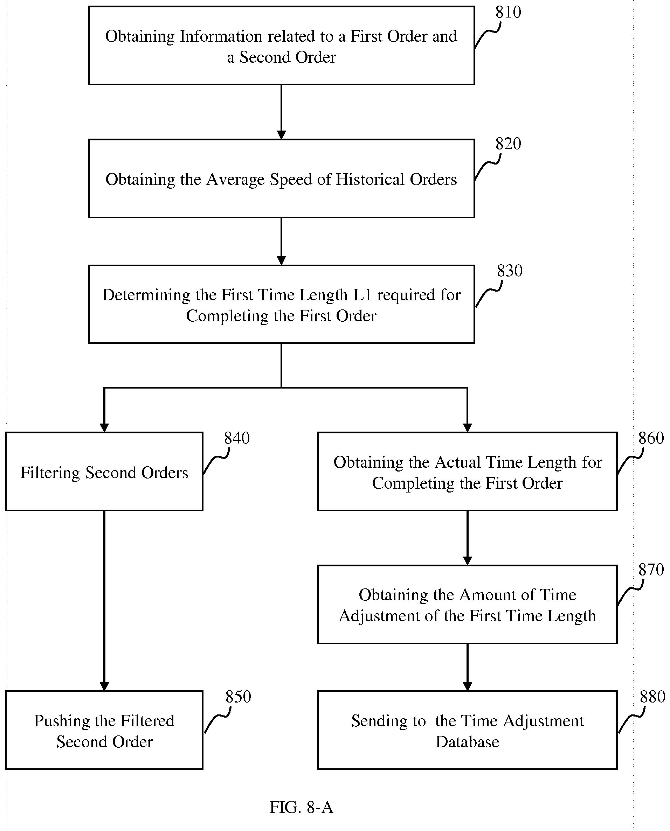

FIG. 8-A is a flow chart of an example of a process for filtering orders according to some embodiments of the present disclosure. In step 810, the order pushing engine 110 may obtain information related to a first order and a second order via the network 150. The information related to the first order and/or the second order may be obtained from one or more passenger terminal devices 120, or one or more information sources 160. The first order and/or the second order may be a real-time order or a non-real-time order. Descriptions of the information related to the first order and the second order may be found in FIG. 7 and are not repeated here.

In step 820, the order pushing engine 110 may obtain an average speed of execution of historical orders via the database 130.

The historical orders may include one or more orders. In some embodiments, the historical orders may be related to the first order. In some embodiments, the historical orders may be related to the driver terminal device 140 (i.e., related to the information of the driver). The information of the driver may be found elsewhere in the present disclosure and is not repeated here. In some embodiments, the historical orders may be related to both of the first order and the information of the driver. In some embodiments, the historical orders related to the information of the driver may be some or all of the past orders received or implemented by the driver terminal device 140. In some embodiments, the historical orders related to the information of the driver may be orders received and executed by the driver terminal device 140 in particular areas and/or at particular time periods or particular time points. According to the historical orders related to the information of the driver, an average driving speed and driving speeds at different time points and/or in different areas may be obtained for a driver. As such, an average driving speed of historical orders may be acquired. In some embodiments in which multiple historical orders satisfy a particular condition, the order pushing engine 110 may determine a driving speed of one of the historical orders, or an average driving speed of some or all of the historical orders. In some embodiments, the average driving speed of the historical orders may be an arithmetic mean of all the driving speeds of multiple historical orders. In some embodiments, the average driving speed of the historical orders may be a geometric mean of all the driving speeds of multiple historical orders. In some embodiments, the average driving speed of the historical orders may be a median of all the driving speeds of multiple historical orders. In some embodiments, some or all of the historical orders may be used in determining the average driving speed of multiple historical orders.

Before obtaining the average speed of historical orders, the order pushing engine 110 may recognize one or more historical orders related to the first order in the historical order database 610 according to some embodiments of the present disclosure. In some embodiments, the association between the historical orders and the first order may indicate that the departure location and/or the destination of the first order and the departure and/or the destination of the historical orders may be in the same geographic area. In some embodiments, the association between the historical orders and the first order may indicate that the pickup time and/or the arrival time of the first order and the pickup times and/or arrival times of the historical orders may be within the same time period. In some embodiments, the association between the historical orders and the first order may indicate that the driving routes of the first order and the historical orders pass through the same geographic area. In some embodiments, historical orders in different time periods may have the same or different impacts on the processing of the above various historical information or other historical information. For example, the information of a historical order performed within a time period that is relatively close to that of the current order and the information of a historical order performed within a time period that is relatively far from that of the current order may have the same impact on the processing result. As another example, the information of a historical order performed within a time period that is relatively close to that of the current order may have more impacts on the processing result, while the information of a historical order performed within a time period that is relatively far from that of the current order may have less or no impact on the processing result.

In some embodiments, the geographic area may be configured as required. For example, the geographic area may be divided based on longitude-latitude, population distribution, commercial activities, functions, applications, the like, or any combination thereof.

In some embodiments, the time periods may be configured as required. In some embodiments, a day may be divided into multiple time periods of the same or different lengths. For example, the order pushing engine 110 may divide a day into 48 time periods. The length of each time period may be half an hour.

It should be noted that the above examples are provided for the purposes of illustration and not intended to limit the scope of the present disclosure. For persons having ordinary skills in the art, various variations and modifications may be conducted under the teaching of the present disclosure about the division principles of the above geographic areas and time periods and on the condition that the driving speed is correctly predicted. However, those variations and modifications may not depart the spirit and scope of this disclosure. For example, geographic areas may be dynamically divided according to traffic conditions of a particular city. As another example, geographic areas in different dates may be divided differently according to periodic trends of the traffic conditions. All such modifications are within the protection scope of the present disclosure. As another example, a time period may be divided differently according to different dates (e.g. weekdays and weekends) within a week. As another example, a time period may be divided dynamically according to the real-time traffic conditions of a day. All such modifications are within the protection scope of the present disclosure.

The order pushing engine 110 may recognize a historical order based on a departure location, destination, driving route, pickup time, arrival time, the like, or any combination thereof of the historical order.

In some embodiments in which the departure location or the destination of a historical order is located in a particular geographic area, the order pushing engine 110 may associate the driving speed of the historical order with the particular geographic area. As such, the order pushing engine 110 may determine driving speeds of the historical orders within the particular geographic area. In some embodiments in which multiple historical orders satisfy a particular condition, the order pushing engine 110 may determine a driving speed of one historical order, or an average driving speed of some or all of the historical orders. In some embodiments, the average driving speed may be an arithmetic mean of multiple driving speeds. In some embodiments, the average driving speed may be a geometric mean of multiple driving speeds. In some embodiments, the average driving speed may be a median of multiple driving speeds. In some embodiments, some or all of the historical orders may be used to determine the average driving speed.

In some embodiments in which the departure location or the destination of a historical order is located in a particular geographic area and the pickup time or the arrival time is within a particular time period, the order pushing engine 110 may associate a driving speed of the historical order with the particular geographic area and the particular time period. As such, the order pushing engine 110 may obtain driving speeds of the historical orders within the particular geographic area and the particular time period. In some embodiments in which multiple historical orders satisfy a particular condition, the order pushing engine 110 may determine the driving speed of one historical order, or an average driving speed of some or all of the historical orders. In some embodiments, the average driving speed may be an arithmetic mean of multiple driving speeds. In some embodiments, the average driving speed may be a geometric mean of multiple driving speeds. In some embodiments, the average driving speed may be a median of multiple driving speeds. In some embodiments, some or all of the historical orders may be used in determining the average driving speed.

According to some embodiments of the present disclosure, the average driving speed of historical orders may be acquired by: obtaining driving distance information of the historical orders based on first location information and second location information of the historical orders; obtaining driving time information of the historical orders based on first time information and second time information of the historical orders; and acquiring the average driving speed of the historical orders based on the driving distance information and the driving time information.

In step 830, the processing module 210 of the order pushing engine 110 may determine a first time length L1 for completing the first order based on the average driving speed of the historical orders and the information related to the first order.

In some embodiments, the processing module 210 may estimate the first time length L1 based on the average driving speed of the historical orders within a preset geographic area, a preset time period, the departure location information and the destination information of the first order.

According to some embodiments of the present disclosure, the route planning unit 370 of the processing module 210 may acquire one or more driving routes using route planning algorithms based on the departure location information and the destination information of the first order. The determining unit 380 may determine driving times of the driving routes based on the acquired driving routes. The route planning algorithms may include but are not limited to conventional route planning algorithm, graphics algorithm, intelligent bionics algorithm and other algorithms. The conventional route planning algorithm may include but is not limited to simulated annealing (SA) algorithm, artificial potential method, fuzzy logic arithmetic, Tabu Search (TS) algorithm, etc. The graphics algorithm may include but is not limited to C-space algorithm (also referred to as image-visible space algorithm), free space algorithm, grid algorithm, etc. The intelligent bionics algorithm may include but is not limited to ant colony algorithm, neural network algorithm, genetic algorithms (GA), particle swarm optimization (PSO), adaptive particle swarm optimization (Adaptive PSO), discrete particle swarm optimization (Discrete PSO), etc. Other algorithms may include but are not limited to Dijkstra algorithm, shortest path faster algorithm (SPFA), Bellman-Ford algorithm, Johnson algorithm, Fallback algorithm, Floyd-Warshall algorithm, etc.

In some embodiments, the route planning unit 370 may determine the geographic area that the driving routes have passed by. The route planning unit 370 may determine a driving distance in the geographic area after acquiring one or more driving routes. The determining unit 380 may determine the driving time of the first order in each geographic area based on the driving distance in each geographic area and the average driving speed in each geographic area within a given time period of the historical orders. The determining unit 380 may perform statistical analysis of the driving times in all of the geographic areas passed by. As such, the determining unit 380 may acquire the driving time through all of the geographic areas. The driving time acquired may be designated as the first time length L1 of the first order.

In step 840, the processing module 210 may filter the second orders after acquiring the first time length L1. In some embodiments, the processing module 210 may filter the second orders based on a proximity of the pickup time of the second orders to the arrival time of the first order. In some embodiments, the arrival time of the first order may be estimated based on the first time length L1 and the pickup time of the first order. In some embodiments, the processing module 210 may filter the second orders based on the proximities of the departure locations of the second orders to the destination of the first order.

In some embodiments, the determining unit 380 of the processing module 210 may determine the estimated arrival time of the first order based on the first time length L1 and the pickup time of the first order.

In some embodiments, the determining unit 350 may compare the estimated arrival time of the first order with the pickup times of the second orders to remove one or more second orders. For example, second orders with the pickup time earlier than the estimated arrival time of the first order may be removed. As another example, the pickup time of the second order may be earlier or later than the estimated arrival time of the first order. If the time interval between the pickup time of a second order and the estimated arrival time of the first order is greater than a threshold time, the second order may be removed. The threshold time may vary based on geographic areas of the departure locations of the second orders, real-time traffic conditions in the geographic areas, time tolerance set by the driver and/or the passenger, the like, or any combination thereof. In some embodiments, the threshold time may be 2 minutes, 5 minutes, 10 minutes, 15 minutes, or the like.

The time tolerance set by the driver and/or the passenger may represent a degree of tolerance of another's early arrival or late arrival by the driver and/or the passenger. In some embodiments, the driver and/or the passenger may set two values of the time tolerance corresponding to degrees of tolerance of the passenger or the driver to the other's early arrival and late arrival, respectively. The two values of the time tolerability may be the same or different. For example, the passenger may accept that the driver arrives 20 minutes earlier, but cannot tolerate that the driver is late for more than 5 minutes. Herein, the time tolerance of the passenger for early arrival and late arrival may be 20 minutes and 5 minutes, respectively. As another example, the driver may tolerate that the passenger arrives 20 minutes in advance, but cannot tolerate that the passenger is late for more than 15 minutes. Herein, the time tolerance for the passenger's early arrival and late arrival may be 20 minutes and 15 minutes, respectively. In some embodiments, the time tolerance of the driver and/or the passenger may be the same value. For example, the wait time that the driver or the passenger accepts may be the same as the time tolerance over the other's late arrival.

It should be noted that the above description of the time tolerance is provided for the purposes of illustration and not intended to limit the scope of the present disclosure. For persons having ordinary skills in the art, various variations and modifications may be conducted under the teaching of the present disclosure about the functions and principles of the time tolerance described above and on the condition that the second orders may be precisely filtered. However, those variations and modifications may not depart the spirit and scope of this disclosure. For example, the time tolerance of the driver may be omitted and only the time tolerance of the passenger may be taken into consideration. As another example, the time tolerance of the driver and/or the passenger to the other's early arrival may be omitted and only the time tolerance of the driver and/or the passenger to the other's late arrival may be taken into consideration. All such modifications are within the protection scope of the present disclosure.

In some embodiments, the determining unit 380 of the processing module 210 may determine a distance between the departure location of each of the second orders and the destination of the first order, based on the corresponding location information. In some embodiments, the distance may be a straight-line distance, a road distance, a driving distance, etc. After determining the distances between the departure locations of the second orders and the destination of the first order, the determining unit 350 may filter the second orders based on correlations between the distances and a threshold distance. In some embodiments, the determining unit 350 may filter out a second order in response to determining that the distance between the departure of the second order and the destination of the first order is greater than the threshold distance. In some embodiments, the threshold distance may vary based on geographic areas of the departure of the second order, real-time traffic conditions in the geographic areas, a distance range set by the driver and/or the passenger, the like, or any combination thereof. In some embodiments, the threshold distance may be 0.5 kilometer, 1 kilometer, 1.5 kilometers, 2 kilometers, or the like.

After filtering out one or more of the second orders, the order pushing engine 110 may obtain one or more filtered second orders.

In step 850, the order pushing engine 110 may push the filtered second orders to one or more driver terminal devices 140 via the network 150 through the driver interface 240. In some embodiments, in addition to pushing the filtered second orders to one or more driver terminal devices 140, the order pushing engine 110 may also send information related to the first order to the passenger terminal device 120 that requests for the second order. The information may be the departure location and/or the destination of the first order, the pickup time and/or the estimated arrival time of the first order, etc.

After determining the first time length L1 for completing the first order in step 830, the order pushing engine 110 may also perform one or more other operations. For example, the order pushing engine 110 may communicate with the driver terminal device 140 that executes the first order.

In step 860, the order pushing engine 110 may obtain an actual time length for completing the first order via the network 150 through the driver interface 240 and/or the passenger interface 230. In some embodiments, the passenger terminal device 120 and/or the driver terminal device 140 may keep regular or irregular communications with the order pushing engine 110 during execution of the first order. The passenger terminal device 120 and/or the driver terminal device 140 may send information about the current location and/or the current time to the order pushing engine 110 via the network 150. At the beginning of a transportation service, i.e., the time when the passenger terminal device 120 and/or the driver terminal device 140 confirms to start a service required in the first order, the order pushing engine 110 may obtain the actual pickup time and/or the departure. At the end of the transportation service, i.e., the time when the passenger terminal device 120 and the driver terminal device 140 arrives at the destination of the first order, the order pushing engine 110 may obtain the actual arrival time and/or the location of the destination. According to the actual pickup time and/or the actual arrival time, the determining unit 380 of the order pushing engine 110 may determine the actual time length for completing the first order.

In step 870, the order pushing engine 110 may obtain an amount of time adjustment of the first time length. According to some embodiments of the present disclosure, the order pushing engine 110 may obtain the amount of time adjustment of the first time length based on the actual time required for completing the first order. The amount of time adjustment may represent the difference between the estimated driving time for completing the first order and the actual driving time. In some embodiments, the amount of time adjustment may be determined as the difference between the actual time length and the determined first time length L1. The amount of time adjustment may be positive, negative, or zero.

It should be noted that the above examples are provided merely for the purposes of illustration, and not intended to limit the scope of the present disclosure. For persons having ordinary skills in the art, various variations and modifications may be conducted under the teaching of the present disclosure about the functions and principles of the amount of time adjustment and on the condition that the second orders may be precisely filtered. However, those variations and modifications may not depart the spirit and scope of this disclosure. For example, the amount of time adjustment may be defined as a ratio of the actual time length to the determined first time length L1. The amount of time adjustment may be larger, smaller, or equal to 1. All such modifications are within the protection scope of the present disclosure.

In some embodiments, after the first order is completed, the order pushing engine 110 may obtain an amount of time adjustment of the first time length. By implementing similar calculations and operations on multiple orders, the order pushing engine 110 may divide the orders based on the given geographic area and/or the given time period after collecting different amounts of time adjustment. In terms of the same geographic area and the same time period, the order pushing engine 110 may obtain information of one or more amounts of time adjustment. In some embodiments, an average value of one or more amounts of time adjustment may be stored in the time adjustment database 640 of the order pushing engine 110. In some embodiments, the average value may be an arithmetic mean. In some embodiments, the average value may be a geometric mean.

In some embodiments, the order pushing engine 110 may proceed to step 880 after step 870. The data related to the amount of time adjustment may be sent to the time adjustment database 640 for storage. In some embodiments, the data related to the amount of time adjustment may be stored according to the geographic area and/or the time period of the amount of time adjustment. For example, different amounts of time adjustment may be assigned to different time periods at the same location. As another example, different amounts of time adjustment may be assigned to different locations during the same time period. Division of the geographic areas and time periods may be found in the above description and is not repeated here.

It should be noted that the above examples are provided for the purposes of illustration and not intended to limit the scope of the present disclosure. For persons having ordinary skills in the art, various variations and modifications may be conducted under the teaching of the present disclosure about the meanings and principles of the amount of time adjustment and on the condition that the second orders may be precisely filtered. However, those variations and modifications may not depart the spirit and scope of this disclosure. For example, the order pushing engine 110 may iteratively implement step 830according to the real-time road condition and the actual location of the driver. The step 830 may include estimating the arrival time with geographic areas and time periods varying when implementing the order. By iteratively implementing step 830, the estimated arrival time at the destination may be adjusted dynamically. As such, the accuracy of subsequent estimation of the arrival time of the first order may be further improved. All such modifications are within the protection scope of the present disclosure.

According to some embodiments of the present disclosure, the amounts of time adjustment or the average value of the amounts of time adjustment may be used to compensate the first time length estimated of the first order to reduce an error between the estimated value and the real value. In some embodiments, the order pushing engine 110 may obtain a new time length by attaching the amounts of time adjustment or the average value of the amounts of time adjustment to the first time length determined based on the average driving speed. The new time length may be used to estimate the driving time for completing the first order and filter the second order to further improve accuracy.

It should be noted that the above description of the step 810 through the step 880 is provided for the purposes of illustration and not intended to limit the scope of the present disclosure. For persons having ordinary skills in the art, various variations and modifications may be conducted under the teaching of the present disclosure about the functions and principles of the steps and on the condition that the second orders may be precisely filtered. However, those variations and modifications may not depart the spirit and scope of this disclosure. For example, the order pushing engine 110 may take the amount of time adjustment into consideration after step 830. The order pushing engine 110 may apply the amount of time adjustment to compensate the determined first time length L1 in step 830 in order to acquire relatively exact time for completing the first order. Then, the order pushing engine 110 may filter the second order according to the compensated time. As another example, the step 860 through step 880 may be omitted in order to simplify the whole process. All such modifications are within the protection scope of the present disclosure.

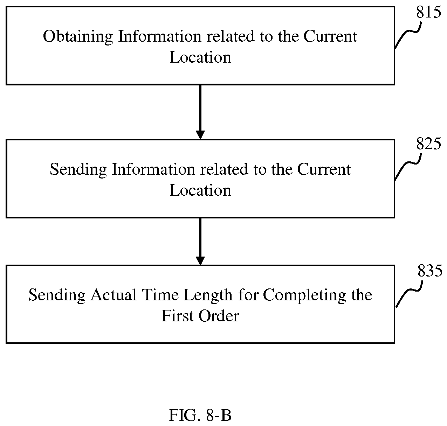

FIG. 8-B is a flow chart of an example of a process for filtering orders according to another embodiment of the present disclosure. Herein, the driver terminal device 140 may be a driver terminal device that is executing or to implement the first order. The description about the types of the driver terminal device 140 may be found in the above description and is not repeated here.

In step 815, the driver terminal device 140 may obtain information related to the current location. The driver terminal device 140 may obtain information related to locations using one or more methods. In some embodiments, the driver terminal device 140 may determine the current location of the driver using one or more positioning technologies via the positioning module 530. In some embodiments, the driver terminal device 140 may receive user inputs and/or operation instructions from the driver by the input/output module 510. As such, the driver terminal device 140 may determine the current location of the driver terminal device 140. For example, the driver terminal device 140 may display a map interface or a pull-down list of optional geographic locations by the display module 520. The driver terminal device 140 may receive operations on the map interface (e.g., moving the map icon, adding pointers, etc.) or choices of one or more geographic locations in the pull-down list by the input-output module 510. As such, the driver terminal may determine the current location. In some embodiments, information related to the current location obtained by the driver terminal device 140 may further include information of the current time.

It should be noted that the above description of the step 815 is provided for the purposes of illustration and not intended to limit the scope of the present disclosure. For persons having ordinary skills in the art, various variations and modifications may be conducted under the teaching of the present disclosure about the methods and principles of determining the current location by the driver terminal device 140 and on the condition that the current location can be determined. However, those variations and modifications may not depart the spirit and scope of this disclosure. For example, by scanning a bar code or a quick response code posted on a public facility, the driver terminal device 140 may obtain the geographic location information corresponding to the bar code or the quick response code. The driver terminal device 140 may designate the obtained geographic location information as the current location of the driver terminal device 140. All such modifications are within the protection scope of the present disclosure.

After obtaining information related to the current location, the driver terminal device 140 may proceed to step 825. The driver terminal device 140 may send the information related to its current location out via the Internet by the communication module 540. The driver terminal device 140 may send the information to the order pushing engine 110 or any other target, such as one or more passenger terminal devices 120, one or more other driver terminal devices 140, the information source 160, etc.

In some embodiments, the step 815 and the step 825 may be implemented in parallel or in a sequence. In some embodiments, the step 825 may be implemented before the step 815. For example, by scanning a bar code or a quick response code posted on a public facility, the driver terminal device 140 may send the information corresponding to the bar code or the quick response code to the order pushing engine 110 or the information source 160 via the network 150. Additionally or alternatively, a geographic location information may be obtained by analyzing the information corresponding to the bar code or the quick response code by the order pushing engine 110 or the information source 160. Then, the order pushing engine 110 or the information source 160 may send the geographic location information to the driver terminal device 140. All such modifications and improvements are within the protection scope of the present disclosure.

In some embodiments in which the destination of the first order is arrived at, the driver terminal device 140 may send the actual time length for completing the first order by the communication module 540 in step 835. The target to which the driver terminal device 140 sends the time length may be the order pushing engine 110, other driver terminal devices 140, passenger terminal devices 120 related to the first order, the information source 160, etc.

In some embodiments, instead of sending the actual time length for completing the first order, the driver terminal device 140 may send the pickup time and the arrival time of the first order to one or more of the above targets via the network 150. As such, the driver terminal device may facilitate the targets to determine the actual time length for completing the first order.

It should be noted that the above description of the step 835 is provided for the purposes of illustration and not intended to limit the scope of the present disclosure. For persons having ordinary skills in the art, various variations and modifications may be conducted under the teaching of the present disclosure about the methods and principles of sending the actual time length for completing the first order by the driver terminal device 140 and on the condition that the current location can be determined. However, those variations and modifications may not depart the spirit and scope of this disclosure. For example, the driver terminal device 140 may omit the step 835. In some embodiments, the driver terminal device 140 may iteratively perform the step 815 and the step 825, i.e., acquiring and transmitting related information and time information of the current location and time regularly or irregularly when executing the first order. By iteratively performing the step 815 and the step 825, the pickup time and the arrival time of the first order may be determined by the order pushing engine 110. All such modifications are within the protection scope of the present disclosure.

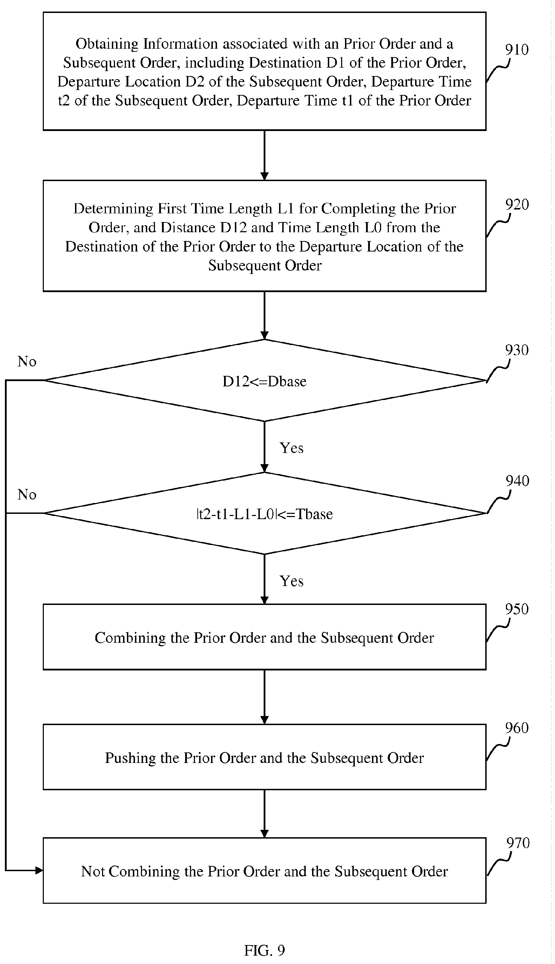

FIG. 9 is a flow chart illustrating an example of a process for combining orders by an order pushing engine according to some embodiments of the present disclosure. As shown in FIG. 9, the order pushing engine 110 may obtain information related to a prior order and/or a subsequent order in step 910. The information may include the destination D1 of the prior order, the departure D2 of the subsequent order, the pickup time t2 of the subsequent order, the pickup time tlof the prior order, the like, or any combination thereof. The step 910 may be implemented by the passenger interface 230 and/or the driver interface 240. According to some embodiments of the present disclosure, the order pushing engine 110 may obtain two orders wherein the earlier one of the two orders (or referred to as the prior order) may have an earlier pickup time t1 and the later one of the two orders (or referred to as the subsequent order) may have a pickup time t2 later than t1. In some embodiments, information related to the prior order and the subsequent order may be obtained from the passenger terminal device 120 and/or the driver terminal device 140, the database 130, the information source 160, the like, or any combination thereof. According to some embodiments of the present disclosure, the order pushing engine 110 may obtain information related to real-time orders and/or future orders sent by the passenger terminal device 120 via the passenger interface 230. The real-time order may refer to a current order request sent by the passenger. The future order may refer to an order request sent by the passenger that will be implemented in the future with respect to the current time. The future order request may include a reserved date and time, and reserved addresses of a departure and a destination. According to some embodiments of the present disclosure, the order pushing engine 110 may obtain information related to the order sent by the driver terminal device 140 via the driver interface 240. The order obtained by the driver interface 240 may be an order requested by one or more passengers by hailing a car service, calling for a transportation service, using one or more transportation service applications, the like, or any combination thereof. According to some embodiments of the present disclosure, the order pushing engine 110 may obtain information related to the order from the database 130. The information of the order in the database 130 may be obtained from a real-time order and/or a future order uploaded by the passenger terminal device 120 via the passenger interface 230. According to some embodiments of the present disclosure, the order pushing engine 110 may obtain information related to the order from the information source 160. The information related to the order in the information source 160 may be obtained using various methods, such as using a voice call, a website, etc. In some embodiments, whether to combine the orders may be further determined based on whether the locations of the orders is in a remote area. According to some embodiments of the present disclosure, the determining unit 380 may first determine squares located in the remote areas. For example, a city may be divided into multiple squares according to its longitude-latitude information. If the longitude-latitude of the departure and the destination of an order is within a square, the order belongs to the square. A statistical analysis may be performed on the average number of orders in each square within a particular time period. If the daily average number of orders in a square is not greater than a threshold, the square is considered to be in a remote area. The time period may range from 1 day to 10 days, from 5 days to 9 days, etc. The threshold may range from 1 to 50, from 25 to 35, etc. The side length of the square may range from 1 kilometer to 5 kilometers, from 2 kilometers to 4 kilometers, etc. In some embodiments, the order pushing engine 110 may obtain any two of the orders in the square of a remote area. The order pushing engine 110 may determine the prior order and the subsequent order according to the sequence of the two order's pickup time by the determining unit 350.

In step 920, the order pushing engine 110 may determine a first time length L1 for completing the prior order. The order pushing engine 110 may determine a distance D12 and a length L0 from the destination of the prior order to the departure location of the subsequent order. The step 920 may be implemented by the determining unit 380 of the processing module 210 of the order pushing engine 110. For example, the calculation of the first time length LI, the distance D12, and the time length L0 may be based on information of historical orders and geographic coordinates of the prior order and/or the subsequent order by the determining unit 380 of the processing module 210 of the order pushing engine 110. According to some embodiments of the present disclosure, the geographic coordinates may be obtained by positioning technologies, including but not limited to global positioning system (GPS), global navigation satellite system (GLONASS), compass navigation system (COMPASS), Galileo positioning system (Galileo), quasi-zenith satellite system (QZSS), base-station positioning technology, wireless fidelity (Wi-Fi) positioning technology, or the like, or any combination thereof. In some embodiments, the calculation of the distance D12 and the time length L0 may be based on the longitude-latitude of the destination of the prior order, the longitude-latitude of the departure of the subsequent order and the driving speed of historical orders.

In step 930, the order pushing engine 110 may compare the distance D12 with a threshold distance Dbase. The step 930 may be implemented by the determining unit 350 of the processing module 210 of the order pushing engine 110. In some embodiments, the determining unit 350 may determine whether the distance D12 is greater than the Dbase (i.e., D12>Dbase). In some embodiments, in response to determining that the distance D12 is greater than the Dbase (i.e., D12>Dbase), the order pushing engine 110 may determine that the prior order is not geographical connectable with the subsequent order and the determination process may proceed to step 970. Alternatively, in response to determining that the distance D12 is no greater than the Dbase (i.e., D12≤Dbase), the order pushing engine 110 may determine that the prior order is geographical connectable with the subsequent order and the determination process may proceed to step 940. In some embodiments in which the prior order is not connectable with the subsequent order in distance, the order pushing engine 110 may not combine the prior order and the subsequent order. In some embodiments, the Dbase may range from about 1 kilometer to 9 kilometers, from about 4 kilometers to 6 kilometers, etc. If the value of the Dbase is too large, there is relatively long idle driving time (e.g. the time of driving without a passenger) for the driver. If the value of the Dbase is too small, there is relatively small or no number of orders that can be combined and matched. In some embodiments, if the longitude-latitude of the destination of the prior order is in the same square as the longitude-latitude of the departure of the subsequent order, then the determining unit 350 may determine that the prior order is connectable with the subsequent order in distance. In some embodiments, the threshold distance Dbase may be adjusted according to the order distribution in an area. For example, if the number of orders in an area is small, the threshold distance Dbase may be increased. Alternatively, if the number of orders in an area is large, the threshold distance Dbase may be reduced. The number of orders determination may be the actual number of the current or historical orders. For example, if the actual number of orders in an area within a particular time period is relatively large, then the threshold distance Dbase in the area within the particular time period may be reduced. Alternatively, if the actual number of orders in the same area within the same particular time period is relatively small, then the threshold distance Dbase in the area within the particular time period may be increased. As another example, if the historical order information in an area within a particular time period indicates that the number of orders within the particular time period is usually large, then the threshold distance Dbase in the area within the particular time period may be reduced. Alternatively, if the historical order information in an area within a particular time period indicates that the number of orders within the particular time period is usually small, then the threshold distance Dbase in the area within the particular time period may be increased.

In step 940, the order pushing engine 110 may compare the absolute value of the difference between the pickup time t2 of the subsequent order and the pickup time t1 of the prior order, the first time length L1 for completing the prior order and the time length L0 from the destination of the prior order to the pickup time of the subsequent order with a threshold time Tbase. The step 940 may be implemented by the determining unit 380 and the determining unit 350 of the processing module 210 of the order pushing engine 110. According to some embodiments of the present disclosure, the order pushing engine 110 may determine the absolute value of the difference |t2-t1-L1-L0| by the determining unit 380. The calculation may be based on the pickup time t2 of the subsequent order, the pickup time t1 of the prior order, the first time length L1 for completing the prior order and the time length L0 from the destination of the prior order to the pickup time of the subsequent order. The order pushing engine 110 may compare |t2-t1-L1-L0| with the threshold time Tbase using the determining unit 350. In some embodiments, the determining unit 350 may determine whether |t2-t1-L1-L0| is greater than the threshold time Tbase (i.e., |t2-t1-L1-L0|>Tbase). In some embodiments, in response to determining that |t2-t1-L1-L0| is greater than the threshold time Tbase (i.e., |t2-t1-L1-L0|>Tbase), the order pushing engine 110 may determine that the prior order is not connectable with the subsequent order in time and the determination process may proceed to step 970. Alternatively, in response to determining that |t2-t1-L1-L0| is no more than the threshold time Tbase (i.e.|t2-t1-L1-L0|≤Tbase), the order pushing engine 110 may determine that the prior order is connectable with the subsequent order in time and the determination process may proceed to step 950. In some embodiments in which the prior order is not connectable with the subsequent order in time, the order pushing engine 110 may not combine the prior order and the subsequent order. In some embodiments, the Tbase may range from about 1 minute to 60 minutes, from about 5 minutes to 15 minutes, etc. If the value of the Tbase is too great (e.g., greater than a threshold), then the driver needs to wait for a relatively long time. If the value of the Tbase is too small (e.g., smaller than a threshold), then there is no order or few number of orders that can be combined and matched. In some embodiments, the Tbase may be the tolerance for waiting by the passenger or the driver. For example, when the value of t2-t1-L1-L0 is positive, the value may indicate how long the driver arrives earlier than the pickup time t2 of the subsequent order, i.e., the length of the driver's wait time for the arrival of the passenger. When the value of t2-t1-L1-L0 is negative, the value may indicate how long the driver arrives later than the pickup time t2 of the subsequent order, i.e., the length of the passenger's wait time for the arrival of the driver. In some embodiments, the driver may have relatively high tolerance to the time length of waiting as the service provider. And the threshold time Tbase may be set as a relatively long time length, e.g., from about 1 minute to 60 minutes, from about 5 minutes to 15 minutes, etc. In some embodiments, the passenger may have relatively low tolerance to the time length of waiting as the service requester. And the threshold time Tbase may be set as a relatively short time length, e.g., from about 0 minute to 30 minutes, from about 0 minutes to 5 minutes, etc. According to some embodiments of the present disclosure, when each of the combined orders is in the squares of a remote area, both of the driver or the passenger may have relatively high tolerance to the time length of waiting and the Tbase may be set as from about 5 minutes to 60 minutes, from about 15 minutes to 30 minutes, etc. In some embodiments, the threshold time Tbase may be adjusted according to the order distribution in the area. For example, if the number of orders in an area is small, the threshold time Tbase may be increased. Alternatively, if the number of orders in an area is large, the threshold time Tbase may be reduced. The number of orders that the determination is based on may be the actual number of the current orders or historical information. For example, if the actual number of orders in an area within a particular time period is relatively large, then the threshold time Tbase in the area within the particular time period may be reduced. Alternatively, if the actual number of orders in the same area within the same particular time period is relatively small, then the threshold time Tbase in the area within the particular time period may be increased. As another example, if the historical order information in an area within a particular time period indicates that the number of orders within the particular time period is usually large, then the threshold time Tbase in the area within the particular time period may be reduced. Alternatively, if the historical order information in an area within a particular time period indicates that the number of orders within the particular time period is usually small, then the threshold time Tbase in the area within the particular time period may be increased.

In step 950, the order pushing engine 110 may combine the prior order and the subsequent order. The step 950 may be implemented by the processing module 210 of the order pushing engine 110. According to some embodiments of the present disclosure, one or more combined orders of the prior order and the subsequent order may be acquired in step 950. In some embodiments in which multiple combined orders of the prior orders and the subsequent orders are obtained, the combined orders of the prior order and the subsequent order may be ranked by the ranking unit 360 of the processing module 210 of the order pushing engine 110 according to the determination results of the determining unit 350 with respect to the threshold distance Dbase and the threshold time Tbase.

In step 960, the order pushing engine 110 may push the ranked combined orders of the prior order and the subsequent order to one or more driver terminal devices 140 via the driver interface 240. As such, the order pushing engine 110 may facilitate responses to the pushed combined orders by the driver terminal devices 140. The responses to the combined orders may include accepting one or more orders in the combined orders. The responses to the combined orders may include refusing one or more orders in the combined orders. In some embodiments, the order pushing engine 110 may push information of the prior orders and/or the subsequent orders to one or more passenger terminal devices 120 via the passenger interface 230. For example, the order pushing engine 110 may send the first order and the second order of the combined order to the passenger terminal devices 120.

In step 970, the order pushing engine 110 may not combine the prior order and the subsequent order.

According to some embodiments of the present disclosure, the order pushing engine 110 may further push the combined orders of the prior order and the subsequent order via the driver interface 240. In some embodiments, the combined order of the prior order and the subsequent order may be pushed in parallel or in sequence. According to some embodiments of the present disclosure, whether the prior order and the subsequent order has been responded to by one or more driver terminal devices 140 may be checked. If both of the prior order and the subsequent order of the combined order have not been responded to by one or more driver terminal devices 140, then the taxi (e.g. the driver) adjacent to the departure location of the prior order may be considered as a suitable taxi. According to a taxi information set collected in real-time, the taxi adjacent to the departure location of the prior order (i.e. the suitable taxi) may be found and the two orders may be combined. The combined orders may be simultaneously sent to the taxi adjacent to the departure location of the prior order. The information of each taxi in the taxi information set may include a serial number of the driver, report time and geographic location information (e.g., longitude-latitude) of the taxi. The taxies adjacent to the departure location of the prior order may be found by: determining distances from the departure of the prior order to each taxi in sequence according to the current geographic location information of each taxi and the departure of the prior order; comparing the distances with a preset radius R. If a distance D from a taxi to the departure location of the prior order is not greater than the preset radius R (i.e., D≤R), then the taxi is considered to be adjacent to the departure location of the prior order. The preset radius D may range from 0 kilometer to 5 kilometers, or from 0.5 kilometer to 4 kilometers. According to some embodiments of the present disclosure, whether the prior order and the subsequent order have been responded to by one or more driver terminal devices 140 may be checked. If the prior order has been responded to by a driver terminal device 140 and the subsequent order has not been responded to by the driver terminal device 140 or other driver terminal devices 140, then the driver terminal device 140 that responses to the prior order may be considered to be a suitable driver terminal device 140 and the subsequent order may be pushed to the driver terminal device 140.

For example, Taxi 1 receives an order A: from Zhongguancun to Xierqi at a current time (e.g., 10:00 am) with an estimated arrival time at 10:30 am. In addition, there is a future order B: pickup time at 10:35am, from Xierqi to Beijing Capital International Airport. According to the order pushing system in the present disclosure, order A and order B may be determined as being connectable orders by the determining unit 350. The pushing module may determine that the Taxi 1 has accepted the order A. Then the order B may be directly pushed to the Taxi 1 with a broadcast "A reservation departures from Xierqi at 10:35 am today and heads to Beijing Capital International Airport. The departure location of the reservation is very close to the destination of your current order and the pickup time of the reservation is close to your arrival time."

Taking the determination of a remote area in Beijing as an example, the diameter of Beijing is 170 kilometers. And according to its longitude-latitude, Beijing may be divided into multiple squares. For example, Beijing may be divided into 2500 squares each with a side length of 3.4 kilometers based on one-fiftieth of the diameter of the city. A statistical analysis may be performed on the average number of orders during the most recent 7 days within each square. Squares with the number of orders less than 30 may be considered as remote areas in general. Assuming that there are two orders: order A is from Zhongguancun to Shahe Higher Education Park at 10:00 of the day, and order B is from Shahe Higher Education Park to Guomao at 11:00 of the day. Since demands of car-hailing in order A's destination (i.e., Shahe Higher Education Park) is relatively low, most drivers are not willing to accept the order A. Since the number of drivers in order B's surrounding is relatively small, it is also difficult to get a car-hailing service. According to the order pushing engine 110 in the present disclosure, the square that the Shahe Higher Education Park locates in is determined to be a remote area by the determining unit 350. The determining unit 380 and the determining unit 350 may determine that order A and order B are connectable. If both of order A and order B have not been accepted by any driver terminal device 140, then order A and order B may be combined and may be sent to the driver terminal devices 140 in the surrounding areas of the order A. Since there is the order B, it is not necessary for the driver to worry about idle driving after completing the order A. In this way, the combination of order A and order B may increase the rate of finishing orders.

It should be noted that a flow chart may be described as a flow diagram, a flow chart table, a data flow diagram, a schematic chart or a block diagram. Although a flow chart may describe steps as a sequential process, actually, the process may implement multiple operations concurrently or simultaneously. Besides, the sequence of the steps may be rearranged. When the steps in the process are completed, the process may proceed to an end or extra steps not included in the flow chart. The process may correspond to a method, a function, a program, a subroutine, a subprogram, etc. When the process corresponds to the function, the ending of the process may correspond to returns of the function to calling function or main function. Besides, it should be obvious to those skilled in the art that the modules, the units or the steps in the above description of the present disclosure may be realized by general determining modules. For example, the modules, the units or the steps may be integrated into one determining module or distributed on a network of multiple determining modules. Alternatively, the modules, the units or the steps may be realized by executable program codes such that the executable program codes may be stored in a storage module and executed by the determining module. The modules, the units or the steps may also be realized by distributing each of them on an individual integrated circuit module or distributing some of the modules or steps on a single integrated circuit module. In this way, the present disclosure is not limited to combinations of any particular hardware or software.

It should be noted that the above examples are provided for the purposes of illustration and not intended to limit the scope of the present disclosure. For persons having ordinary skills in the art, various variations and modifications may be conducted under the teaching of the present disclosure. However, those variations and modifications may not depart the spirit and scope of this disclosure.

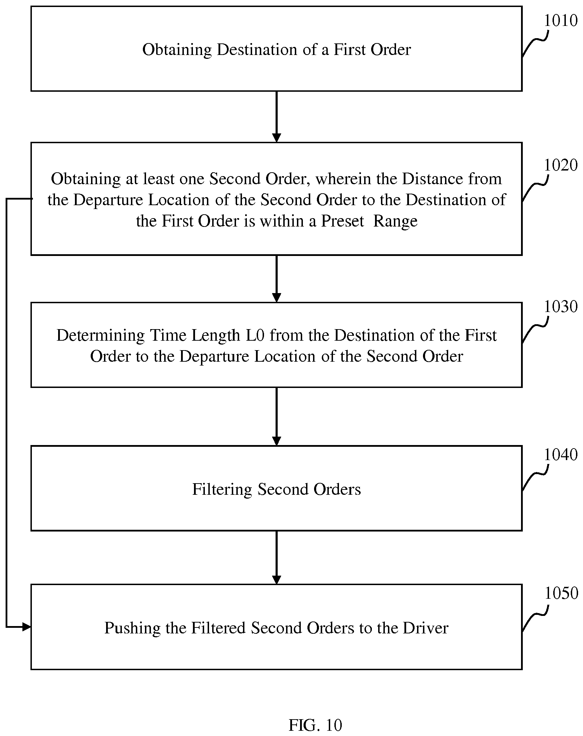

FIG. 10 is a flow chart of an exemplary process for pushing orders using an order pushing engine according to some embodiments of the present disclosure. As shown in FIG. 10, the order pushing engine 110 may obtain a destination of a first order in step 1010. More particularly, for example, the first order may first be obtained via the passenger interface 230 and/or the driver interface 240, and then the destination of the first order may be acquired by the address analyzing unit 310 of the processing module 210. According to some embodiments of the present disclosure, the order pushing engine 110 may obtain the destination of the first order provided by the driver terminal device 140 via the driver interface 240. Herein, the first order provided by the driver terminal device 140 may be initiated by passengers by hailing a car service, calling a transportation service, passengers using transportation service applications, the like, or any combination thereof. According to some embodiments of the present disclosure, the order pushing engine 110 may obtain the destination of the first order provided by the passenger device 120 via the passenger interface 230. In some embodiments, the passenger terminal device 120 may send a service request in a variety of forms, including but not limited to text, voice, images, video, or the like, or any combination thereof. According to some embodiments of the present disclosure, the image processing unit 320, the voice processing unit 330 and the text processing unit 340 of the processing module 210 of the order pushing engine 110 may process order requests in different forms, respectively. The destination information of the order may be acquired by the address analyzing unit 310. According to some embodiments of the present disclosure, the destination may be obtained based on the current order of the driver. For example, if the current order of the driver is obtained from a transportation service application installed on the driver terminal device 140, then destination obtained by the transportation service application may be the destination of the current order. For example, if a driver drives from the Guomao to the Tongzhoubeiyuan on the Jing-Tong Highway and passes by the Communication University of China according to the current order of the driver, then the Tongzhoubeiyuan is considered as the destination. Moreover, detailed descriptions of sending a second order related to the destination Tongzhoubeiyuan rather than sending the Communication University of China passed by may be found in the following embodiments of the present disclosure. According to some embodiments of the present disclosure, the destination information may be further provided by the driver. For example, if the driver needs to send his/her children to school at first and then starts to grab orders and pick up passengers, then the driver may provide the address of the school as the destination.

In step 1020, the order pushing engine 110 may obtain at least one second order wherein a distance from the departure location of the second order to the destination of the first order is within a preset range. The second order may be obtained via the passenger interface 230 and/or the driver interface 240. The determining unit 350 of the processing module 210 may determine the distance between the departure location of the second order and the destination of the first order. The distance may be a straight-line distance, a road distance, or a driving distance. In some embodiments, the second order may be obtained from the passenger terminal device 120 and/or the driver terminal device 140, the database 130, the information source 160, etc. In some embodiments, the determining unit 350 may determine whether the departure location of the second order is in the same place as the destination of the first order or in the surrounding areas of the destination of the first order. In some embodiments, if the departure location of the second order obtained by the order pushing engine 110 is the same as the destination of the first order, the second order may be directly pushed to the driver terminal device 140 via the driver interface 240. According to some embodiments of the present disclosure, a preset area related to the destination of the first order may be determined. For example, the area may be centered at the destination with a diameter of 1 kilometer. Then, the second order in the area may be obtained. For example, if the driver drives from the Guomao to the Tongzhoubeiyuan on the Jing-Tong Highway and passes by the Communication University of China as described in above disclosure, then second orders related to the destination Tongzhoubeiyuan may be sent to the driver. For example, second orders with departure locations within an area (e.g. an area centered at the destination Tongzhoubeiyuan with a diameter of 1 kilometer) may be sent to the driver.

In step 1030, the order pushing engine 110 may determine a time length L0 from the destination of the first order to the departure location of the second order. The step 1030 may include determining the time length L0 from the destination of the first order to the departure location of the second order by the determining unit 380 according to the second order determined by the determining unit 350 of the processing module 210 of the order pushing engine 110. Herein, the distance from the destination of the first order to the departure location of the second order is within a preset range. In some embodiments, the time length L0 determined by the determining unit 380 is based on information of a driving distance, a road condition, a driving direction, etc. According to some embodiments of the present disclosure, a road section (e.g. main roads, or one-way streets in surrounding areas of the destination) related to the destination may first be determined. Then, second orders that start from the road section may be determined and obtained to ensure that the driving direction from the destination to the departure location of the second order is the same as the driving direction of the driver after arriving at the destination. For example, if the driver wants to send his/her children to Beijing No. 80 High School, which locates in surrounding areas of the north-to-south side road of the eastern third ring road of Beijing, and the driver may drive from north to south to the Beijing No. 80 High School and may provide the address of the school as the destination, then second orders related to the school may be sent to the driver. For example, a second order may be sent to the driver if the departure location of the second order is located in the south of the school and on the side road of the eastern third ring road of Beijing. In this way, it may avoid the driver driving around multiple bridge areas to pick up a passenger, and thus the idle driving distance may be reduced.

It should be noted that the second order may be determined not only based on areas and road sections related to the destination, but also based on other information, e.g. the arrival time of the driver at the destination, and it is further described in the following embodiments. According to some embodiments of the present disclosure, if the driver is driving from the Guomao to the Tongzhoubeiyuan through the Jing-Tong Highway, and is passing by the Communication University of China, then second orders related to the destination Tongzhoubeiyuan are sent to the driver. For example, if the estimated arrival time of the driver at the destination Tongzhoubeiyuan is in 20 minutes, then second orders (e.g. a future order) with pickup time in 20 minutes may be sent to the driver. In some embodiments, the arrival time at the destination Tongzhoubeiyuan may be determined based on the congestion condition of the Jing-Tong Highway that may be provided by the road management department. According to the description of another above embodiment, if the driver needs to send his/her children to Beijing No. 80 High School and provides the address of the school as the destination, then second orders related to the school may be sent to the driver. For example, if the driver designates 8:00 am as the arrival time at the destination, then second orders with a pickup time later than 8:00 am may be sent to the driver. It should be obvious to those skilled in the art that the above methods of obtaining and sending second orders are simply schematic and different weights may be allocated for each of them according to practical requirements. In practical applications, other methods of obtaining and sending second orders may be used in order to make full use of the practical driving condition of the driver and reduce idle driving distance. All such methods may be within the protection scope of the present disclosure.

In step 1040, the order pushing engine 110 may filter the second orders. The step 1040 may be implemented by the determining unit 350 of the processing module 210. According to some embodiments of the present disclosure, the determining unit 350 may compare the time length L0 determined by the determining unit 380 with a preset time length and may filter the second orders according to the result of the comparison. Herein, the preset time length may be determined based on the length of wait time accepted by the passenger and/or the driver, and/or based on the time length from the arrival time of the first order to the pickup time of the second order. According to the description of one above embodiment, there may be one or more filtered second orders. The step 1040 may further include: ranking the filtered second orders by the ranking unit 360 of the processing module 210 according to the distance between the destination of the first order and the departure location of the second order, and/or the required time length L0 driving from the destination of the first order to the departure location of the second order.

In step 1050, the order pushing engine 110 may push the filtered second orders to the driver. The step 1050 may be implemented by the driver interface 240. According to some embodiments of the present disclosure, the driver interface 240 may push an order list in which the filtered second orders are ranked by the ranking unit 360, to the driver terminal device 140.

It should be noted that a flow chart may be described as a flow diagram, a flow chart table, a data flow diagram, a structural chart or a block diagram. Although a flow chart may describe steps as a sequential process, the multiple operations may be implemented concurrently or simultaneously. Besides, the sequence of the steps may be rearranged. When the steps in the process are completed, the process may proceed to an end or extra steps not included in the flow chart. The process may correspond to a method, a function, a program, a subroutine, subprogram, etc. When the process corresponds to the function, the ending of the process may correspond to returns of the function to calling function or main function. Besides, it should be obvious to those skilled in the art that the modules, the units or the steps in the above description of the present disclosure may be realized by general determining modules. For example, the modules, the units or the steps may be integrated into one determining module, or distributed on a network of multiple determining modules. Alternatively, the modules, the units or the steps may be realized by executable program codes such that the modules, the units or the steps may be stored in a storage module and executed by the determining module. The modules, the units or the steps may also be realized by distributing them on individual integrated circuit modules, respectively, or distributing some of the modules or steps on a single integrated circuit module. In this way, the present disclosure is not limited to combinations of any particular hardware and software.

It should be noted that the above examples are provided for the purposes of illustration and not intended to limit the scope of the present disclosure. For persons having ordinary skills in the art, various variations and modifications may be conducted under the teaching of the present disclosure. However, those variations and modifications may not depart the spirit and scope of this disclosure.

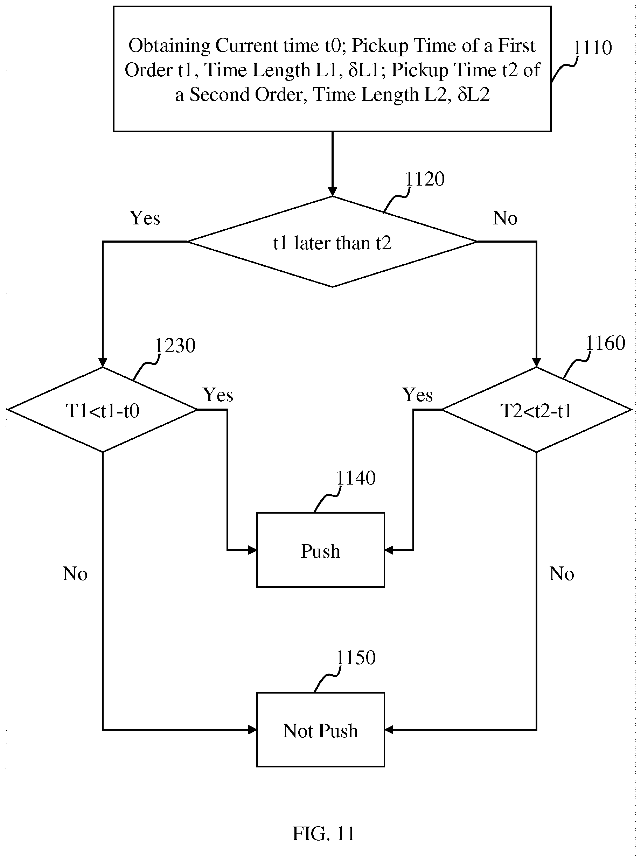

FIG. 11 is a flow chart of a process for pushing orders according to some embodiments of the present disclosure In step 1110, the order pushing engine 110 may obtain the current information of a driver, a first order, a second order, and information related to the first order and the second order. The step 1110 may be implemented by the passenger interface 230 and the driver interface 240. In some embodiments, the first order and the second order may be orders to be combined and to be pushed. There may be one or more first orders and one or more second orders. In some embodiments, one of the first orders may be a future order that has been accepted by the driver terminal device 140. There may be one or more second orders to be pushed. For brevity, one first order and one second order are described in the following disclosure. However, it should be noted that if there are multiple second orders, then the following procedure may be implemented iteratively on each of the second orders. The following description is under the circumstance that the first order is a future order that has been accepted by the driver terminal device 140, and the second order is about to be pushed. The current information of the driver may include current time t0 and a current location. The information contained in the first order may include the first order's departure location, destination, pickup time t1, tips, the like, or any combination thereof. The information related to the first order may include the time length L1 required for completing the first order. The information contained in the second order may include the second order's departure location, destination, pickup time t2, tips, the like, or any combination thereof. The information related to the second order may include the time length L2 required for completing the second order. In some embodiments, the information related to the first order may also include the amount of time adjustment δL1 required for completing the first order. The information related to the second order may also include an amount of time adjustment 8L2 required for completing the second order. In some embodiments, information about the departure location and the destination of the first order, and the departure location and the destination of the second order may be presented in the forms of coordinates, text, voice, images, video, the like, or any combination thereof.

In some embodiments, the time length L1 required for completing the first order may be acquired according to an average speed of vehicles stored in the database 130. According to the departure location and the destination of the first order, the determining unit 340 of the processing module 210 may determine a distance between the departure location and the destination of the first order. Then the determining unit 340 may obtain the time length L1 required for completing the first order based on the average speed. The method of determining the time length L2 required for completing the second order may be similar to the method of determining the time length L1 required for completing the first order, and it is not repeated here. The amounts of time adjustment δL1 and 8L2 may be acquired based on their corresponding relationship with a preset area and time period. The corresponding relationship may be stored in the time adjustment database 640 of the database 130. In some embodiments, the values of the time adjustment δL1 and 8L2 may be positive or negative. For example, if the time period during which the first order or the second order is executed is rush hours, holidays, etc., and/or the intermediate area is close to a business area, a school, etc., the values of time adjustment δL1 and 8L2 may be positive. Alternatively, if the time period during which the first order or the second order is executed is travel-favorable and not rush hours, etc., or the intermediate area is travel-favorable, the values of time adjustment δL1 and 8L2 may be negative. In some embodiments, the amount of time adjustment δL1 may be related to the distance between the departure location and the destination of the first order. And the amount of time adjustment δL1 may increase with the distance. In some embodiments, the amount of time adjustment 8L2 may be related to the distance between the departure location and the destination of the second order. The amount of time adjustment 8L2 may increase with the distance. It should be noted that the acquisition of the current information of the driver, the first order, the second order, and information related to the first order and the second order may be completed in the same step or in different steps.

In step 1120, the order pushing engine 110 may compare a chronological order of a pickup time t1 of the first order to a pickup time t2 of the second order. The step 1120 may be implemented by the determining unit 350 of the processing module 210. In some embodiments in which the pickup time t1 of the first order is later than the pickup time t2 of the second order, then the step 1130 is implemented. In step 1130, the order pushing engine 110 may compare the time interval t1-t0 between the pickup time t1 of the first order and the current time t0 with T1. The step 1130 may be implemented by the determining unit 350 of the processing module 210. Herein, T1 may be acquired based on an estimated time required for driving from the current location of the driver to the departure location of the second order, a time length L2 for completing the second order, and an estimated time required for drive from the destination of the second order to the departure location of the first order. In some embodiments, T1 may include an amount of time adjustment 8L2 for completing the second order, an amount of time adjustment required for drive from the current location of the driver to the departure location of the second order, and an amount of time adjustment required for driving from the destination of the second order to the departure location of the first order. If T1 is not less than t1-t0, then step 1150 is implemented, and the second order may be not pushed. If T1 is less than t1-t0, then step 1140 is implemented, and the second order may be pushed. In some embodiments, the second order may be pushed in real time. In some embodiments, the order pushing engine 110 may store orders that have been determined to be pushed. The order pushing engine may push the orders when a condition is satisfied. The condition may be that the number of the orders has reached a certain value, a certain time point has been reached, etc. In some embodiments, the order that has been determined to be pushed may be amended. For example, if there is a more suitable order to be combined with, the order that has been determined to be pushed may be re-combined. In some embodiments, in the step 1130, T1 may be compared with t1-t0 or a value wherein the difference between t1-t0 and the value is within a preset range of value. In some embodiments, the preset range of value may be no more than 10 minutes. In some embodiments, the preset range of value may be no more than 5 minutes.

In step 1120, if the pickup time of the first order t1 is earlier than the pickup time of the second order t2, then step 1160 is implemented. In step 1160, the order pushing engine 110 may compare a time interval t2-t1 between the pickup time t2 of the second order and the pickup time t1 of the first order with T2. The step 1160 may be implemented by the determining unit 350 of the processing module 210. Herein, T2 may be acquired based on a time length L1 for completing the first order and an estimated time required for driving from the destination of the first order to the departure location of the second order. In some embodiments, T2 may include an amount of time adjustment δL1 for completing the first order, and an amount of time adjustment required for driving from the destination of the first order to the departure location of the second order. If T2 is not less than t2-t1, then step 1150 is implemented not to push the second order; otherwise, if T2 is less than t2-t1, then step 1140 is implemented to push the second order. In some embodiments, the second orders may be pushed in real time. In some embodiments, the order pushing engine 110 may store orders that have been determined to be pushed, and may push the orders when a condition is satisfied. The condition may be that the number of the orders has reached a certain value, a certain time point has been reached, etc. In some embodiments, the order that has been determined to be pushed may be amended. For example, if there is a more suitable order to be combined with, the order that has been determined to be pushed may be re-combined. In some embodiments, T2 may be compared with t2-t1 or a value wherein the difference between t2-t1 and the value is within a preset range of value. In some embodiments, the preset range of value may be no more than 15 minutes. In some embodiments, the preset range of value may be no more than 10 minutes. In some embodiments, the preset range of value may be no more than 5 minutes. The preset range of value may be other time lengths.

It should be noted that the above examples are provided for the purposes of illustration and not intended to limit the scope of the present disclosure. For persons having ordinary skills in the art, various variations and modifications may be conducted under the teaching of the present disclosure about the principles of the above processes and on the condition that the above functions can be realized. However, those variations and modifications may not depart the spirit and scope of this disclosure. For example, if a pickup time of the second order t2 is earlier than a pickup time of the first order t1, then the determining unit 350 may compare the time length L2 for completing the second order with a time interval t1-t0 between the current time t0 and the pickup time t1 of the first order. If L2 is more than t1-t0, then the order pushing engine 110 may directly determine that the second order is not suitable to be pushed and may not push the second order. Also, the determining unit 380 may not need to determine a sum of the time required for driving from the current location of the driver to the departure location of the second order, the estimated time length L2 for completing the second order, and the estimated time required to drive from the destination of the second order to the departure of the first order. In some embodiments, if the pickup time of the second order t2 is later than the pickup time of the first order t1, then the determining unit 350 may compare the estimated time length L1 for completing the first order with t2-t1. If L1 is more than t2-t1, then the order pushing engine 110 may directly determine that the second order is not suitable to be pushed and may not push it. All such modifications are within the protection scope of the present disclosure.

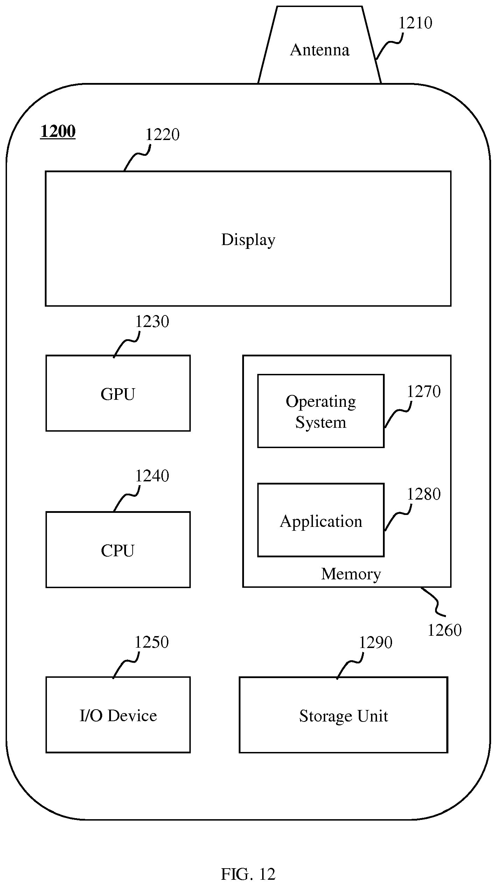

FIG. 12 illustrates a structure of a mobile device that is configured to implement a specific system disclosed in the present disclosure. In some embodiments, a user terminal device configured to display and communicate information related to locations may be a mobile device 1200. The mobile device may include but is not limited to a smart phone, a tablet computer, a music player, a portable game console, a GPS receiver, a wearable calculating device (e.g. glasses, watches, etc.), or the like. The mobile device 1200 may include one or more central processing units (CPUs) 1240, one or more graphical processing units (GPUs) 1230, a display 1220, a memory 1260, an antenna 1210 (e.g. a wireless communication unit), a storage unit 1290, and one or more input/output (I/O) devices 1250. Moreover, the mobile device 1200 may also be any other suitable component that includes but is not limited to a system bus or a controller (not shown in FIG. 12). As shown in FIG. 12, a mobile operating system 1270 (e.g. IOS, Android, Windows Phone, etc.) and one or more applications 1280 may be loaded from the storage unit 1290 to the memory 1260 and implemented by the CPUs 1240. The application 1280 may include a browser or other mobile applications configured to receive and process information related to locations in the mobile device 1200. The passenger/driver may obtain communication information related to locations through the system I/O device 1250, and provide the information to the order pushing engine 110 and/or other modules or units of the system 100, e.g. the network 150.

In order to implement various modules, units and their functions described above, a computer hardware platform may be used as hardware platforms of one or more elements (e.g., the order pushing engine 110 and/or other sections of the system 100 described in FIG. 1 through FIG. 11). Since these hardware elements, operating systems and program languages are common, it may be assumed that persons skilled in the art may be familiar with these techniques and they may be able to provide information required in the on-demand service according to the techniques described in the present disclosure. A computer with user interface may be used as a personal computer (PC), or other types of work stations or terminal devices. After being properly programmed, a computer with user interface may be used as a server. It may be considered that those skilled in the art may also be familiar with such structures, programs, or general operations of this type of computer device. Thus, extra explanations are not are not described for the Figures.

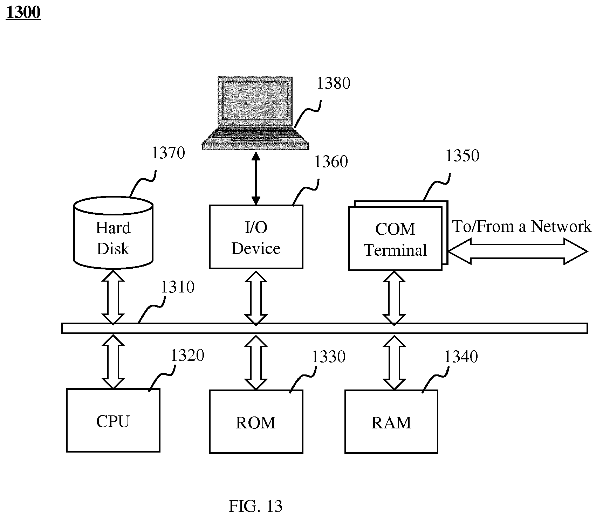

FIG. 13 illustrates a structure of a computing device that is configured to implement a specific system disclosed in the present disclosure. The particular system may use a functional block diagram to explain the hardware platform containing one or more user interfaces. The computer may be a computer with general or specific functions. Both types of the computers may be configured to implement any particular system according to some embodiments of the present disclosure. The computer 1300 may be configured to implement any components that provides information required by the on-demand service disclosed in the present description. For example, the order pushing engine 110 may be implemented by hardware devices, software programs, firmware, or any combination thereof of a computer like the computer 1300. For brevity, FIG. 13 depicts only one computer. In some embodiments, the functions of the computer, providing information that on-demand services may require, may be implemented by a group of similar platforms in a distributed mode to disperse the processing load of the system.

The computer 1300 may include a communication terminal 1350 that may connect with a network that may implement the data communication. The computer 1300 may also include a CPU that is configured to execute instructions and includes one or more processors. The schematic computer platform may include an internal communication bus 1310, different types of program storage units and data storage units, e.g. a hard disk 1370, a read-only memory (ROM) 1330, a random-access memory (RAM) 1340), various data files applicable to computer processing and/or communication, and some program instructions executed possibly by the CPU. The computer 1300 may also include an I/O device 1360 that may support the input and output of data flows between the computer and other components (e.g. a user interface 1380). Moreover, the computer 1300 may receive programs and data via the communication network.

Various aspects of methods of providing information required by on-demand service and/or methods of implementing other steps by programs are described above. The programs of the technique may be considered as "products" or "artifacts" presented in the form of executable codes and/or relative data. The programs of the technique may be joined or implemented by the computer readable media. Tangible and non-volatile storage media may include any type of memory or storage that is applied in computer, processor, similar devices, or relative modules. For example, the tangible and non-volatile storage media may be various types of semiconductor storages, tape drives, disc drives, or similar devices capable of providing storage function to software at any time.

Some or all of the software may sometimes communicate via a network, e.g. the Internet or other communication networks. This kind of communication may load a software from a computer device or a processor to another. For example, a software may be loaded from a management server or a main computer of the on-demand service system to a hardware platform in a computer environment, or to other computer environments capable of implementing the system, or to systems with similar functions of providing information required by on-demand service. Correspondingly, another media used to transmit software elements may be used as physical connections among some of the equipment. For example, light wave, electric wave, electromagnetic wave, etc. may be transmitted by cables, optical cables or air. Physical media used to carry waves, e.g. cable, wireless connection, optical cable, or the like, may also be considered as media of hosting software. Herein, unless the tangible "storage" media is particularly designated, other terminologies representing the "readable media" of a computer or a machine may represent media joined by the processor when executing any instruction.

A computer readable media may include a variety of forms, including but is not limited to tangible storage media, wave-carrying media or physical transmission media. Stable storage media may include compact disc, magnetic disk, or storage systems that are applied in other computers or similar devices and may achieve all the sections of the system described in the drawings. Unstable storage media may include dynamic memory, e.g. the main memory of the computer platform. Tangible transmission media may include coaxial cable, copper cable and optical fiber, including circuits forming the bus in the internal of the computer system. Wave-carrying media may transmit electric signals, electromagnetic signals, acoustic signals or light wave signals. And these signals may be generated by radio frequency communication or infrared data communication. General computer readable media may include hard disk, floppy disk, magnetic tape, or any other magnetic media; CD-ROM, DVD, DVD-ROM, or any other optical media; punched cards, or any other physical storage media containing aperture mode; RAM, PROM, EPROM, FLASH-EPROM, or any other memory chip or magnetic tape; carrying waves used to transmit data or instructions, cable or connection devices used to transmit carrying waves, or any other program code and/or data accessible to a computer. Most of the computer readable media may be applied in executing instructions or transmitting one or more results by the processor.

It may be understood to those skilled in the art that various alterations and improvements may be achieved according to some embodiments of the present disclosure. For example, the various components of the system described above are all achieved by hardware equipment. In fact, the various components of the system described above may be achieved merely by software, e.g. installing the system on the current server. Additionally or alternatively, the location information disclosed here may be provided by a firmware, a combination of a firmware and a software, a combination of a firmware and a hardware, or a combination of a firmware, a hardware and a software.

The present disclosure and/or some other examples have been described in the above. According to descriptions above, various alterations may be achieved. The topic of the present disclosure may be achieved in various forms and embodiments, and the present disclosure may be further used in a variety of application programs. All applications, modifications and alterations required to be protected in the claims may be within the protection scope of the present disclosure.

## Claims

1. A system for pushing orders, comprising:
a computer readable storage medium configured to store an executable module, wherein the executable module comprises:
a service requester interface configured to:
obtain at least one first order and information related to the at least one first order, wherein the information related to the at least one first order comprises geographic information related to the at least one first order and time information related to the at least one first order; and
obtain at least one second order and information related to the at least one second order, wherein the information related to the at least one second order comprises geographic information related to the at least one second order and time information related to the at least one second order;
a processing module configured to filter the at least one second order based on the information related to the at least one first order and the information related to the at least one second order to generate at least one filtered second order;
a service provider interface configured to send the at least one filtered second order; and
at least one processor configured to implement the executable module stored in the computer readable storage medium.

2. The system of claim 1, wherein the geographic information related to the at least one first order comprises information of a first departure location and a first destination,
wherein the time information related to the at least one first order comprises information of a first pickup time of the at least one first order,
wherein the geographic information related to the at least one second order comprises information of a second departure location and a second destination, and
wherein the time information related to the at least one second order comprises information of a second pickup time of the at least one second order.

3. The system of claim 2, wherein to filter the at least one second order, the processing module is configured to:
determine a distance between the first destination and the second departure location; and
select the at least one filtered second order such that the distance between the first destination and the second departure location is less than a threshold distance.

4. The system of claim 3, wherein the processing module is further configured to:
determine a first time length for completing the at least one first order;
determine a first time duration from the first destination of the at least one first order to the second departure location of the at least one second order;
determine a first time interval between the second pickup time of the at least one second order and the first pickup time of the at least one first order;
determine a first time difference based on the first time interval, the first time length, and the first time duration; and
select the at least one filtered second order based on the first time difference and a first threshold time length.

5. The system of claim 4, wherein the first time length for completing the at least one first order is determined based on a driving speed of a historical order.

6. The system of claim 5, wherein the first time length is determined based on an amount of time adjustment.

7. The system of claim 6, wherein the amount of time adjustment is determined based on an estimated completion time of the historical order and an actual completion time of the historical order.

8. The system of claim 2, wherein to filter the at least one second order, the processing module is configured to:
obtain a current time and a current location of a service provider; and
select the at least one filtered second order with a pickup time earlier than the first pickup time of the at least one first order.

9. The system of claim 8, wherein the processing module is further configured to:
determine a second time duration from the current location of the service provider to the second departure location of the at least one second order;
determine a second time length for completing the at least one second order;
determine a third time duration from the second destination of the at least one second order to the first departure location of the at least one first order;
determine a second time interval between the second pickup time of the at least one second order and the current time;
determine a second time difference based on the second time interval, the second time length, the second time duration, and the third time duration; and
select the at least one filtered second order based on the second time difference and a second threshold time length.

10. The system of claim 9, wherein the second time length for completing the at least one second order by the processing module is determined based on a driving speed of a historical order.

11. The system of claim 9, wherein the second time length is determined based on an amount of time adjustment.

12. The system of claim 11, wherein the amount of time adjustment is determined based on an estimated completion time of the historical order and an actual completion time of the historical order.

13. A method of pushing orders, comprising:
obtaining at least one first order and information related to the at least one first order, wherein the information related to the at least one first order comprises geographic information related to the at least one first order and time information related to the at least one first order;
obtaining at least one second order and information related to the at least one second order, wherein the information related to the at least one second order comprises geographic information related to the at least one first order and time information related to the at least one second order;
filtering the at least one second order based on the information related to the at least one first order and the information related to the at least one second order to generate at least one filtered second order; and
sending the at least one filtered second order.

14. The method of claim 13, wherein the geographic information related to the at least one first order comprises information of a first departure location and a first destination,
wherein the time information related to the at least one first order comprises information of a first pickup time of the at least one first order,
wherein the geographic information related to the at least one second order comprises information of a second departure location and a second destination, and
wherein the time information related to the at least one second order comprises information of a second pickup time of the at least one second order.

15. The method of claim 14, wherein the filtering of the at least one second order comprises:
determining a distance between the first destination of the at least one first order and the second departure location of the at least one second order; and
selecting the at least one filtered second order such that the distance between the first destination of the at least one first order and the second departure of the at least one filtered second order is less than a threshold distance.

16. The method of claim 15, further comprising:
determining a first time length for completing the at least one first order;
determining a first time duration from the first destination of the at least one first order to the second departure location of the at least one second order;
determining a first time interval between the first pickup time of the at least one first order and the second pickup time of the at least one second order;
determining a first time difference based on the first time interval, the first time length, and the first time duration; and
selecting the at least one filtered second order based on the first time difference and a first threshold time length.

17. The method of claim 16, wherein the first time length for completing the at least one first order is determined based on a driving speed of a historical order.

18. The method of claim 16, wherein the first time length is determined based on an amount of time adjustment.

19. The method of claim 18, wherein the amount of time adjustment is determined based on an estimated completion time of the historical order and an actual completion time of the historical order.

20. The method of claim 14, wherein the filtering of the at least one second order comprises:
obtaining a current time and a current location of a service provider; and
selecting the at least one filtered second order with a pickup time earlier than the first pickup time of the least one first order.

21. The method of claim 20, further comprising:
determining a second time duration from the current location of the service provider to the second departure location of the at least one second order;
determining a second time length for completing the at least one second order;
determining a third time duration from the second destination of the at least one second order and the first departure location of the at least one first order;
determining a second time interval between the second pickup time of the at least one second order and the current time;
determining a second time difference based on the second time interval, the second time length, the second time duration, and the third time duration; and
selecting the at least one filtered second order based on the second time difference and a second threshold time length.

22. The method of claim 21, wherein the second time length for completing the at least one second order is determined based on a driving speed of a historical order.

23. The method of claim 21, wherein the second time length is determined based on an amount of time adjustment.

24. The method of claim 23, wherein the amount of time adjustment is determined based on an estimated completion time of the historical order and an actual completion time of the historical order.

25. A method of using a system for pushing orders, comprising:
sending, by a terminal, geographic information related to the terminal and time information related to the terminal to a system as claimed in claim 1; and
receiving, by the terminal, at least one filtered order generated by the system for pushing orders.

26. The method of claim 25, further comprising:
sending, by the terminal, a response to the at least one filtered order to the system.

27. The method of claim 25, wherein the terminal is a driver terminal device.

28. A method of using a system for pushing orders, comprising:
sending, by a terminal, information related to at least one second order to a system as claimed in claim 1; and
receiving, by the terminal, a filtered order generated by the system.

29. The method of claim 28, wherein the terminal is a passenger terminal device.
